(19) Europäisches Patentamt
European Patent Office
Office européen des brevets

(11) EP 4 032 934 B1

(12) **EUROPEAN PATENT SPECIFICATION**

(45) Date of publication and mention of the grant of the patent:
**20.03.2024 Bulletin 2024/12**

(21) Application number: **21152487.1**

(22) Date of filing: **20.01.2021**

(51) International Patent Classification (IPC):
***C08G 65/40*** *(2006.01)* ***B01J 41/13*** *(2017.01)*
***C08G 75/23*** *(2006.01)* ***C08J 5/22*** *(2006.01)*
***C25B 13/08*** *(2006.01)* ***H01M 8/1025*** *(2016.01)*
***H01M 8/1072*** *(2016.01)*

(52) Cooperative Patent Classification (CPC):
**C08G 65/40; C08G 65/4056; C08G 75/23; C08J 5/2256; C25B 1/04; C25B 9/19; C25B 13/08; H01M 8/1025; H01M 8/1072;** C08J 2381/06; H01M 8/188; Y02E 60/50

# (54) POLYMERIC ANION-CONDUCTING COMPOUND, ITS PREPARATION AND ITS USE IN ELECTROCHEMISTRY

POLYMERE ANIONENLEITENDE VERBINDUNG, IHRE HERSTELLUNG UND IHRE VERWENDUNG IN DER ELEKTROCHEMIE

COMPOSÉ POLYMÈRE CONDUCTEUR D'ANIONS, SA PRÉPARATION ET SON UTILISATION EN ÉLECTROCHIMIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.07.2022 Bulletin 2022/30**

(73) Proprietor: **Evonik Operations GmbH**
**45128 Essen (DE)**

(72) Inventors:
- **MALJUSCH, Artjom**
  **44866 Bochum (DE)**
- **CONRADI, Oliver**
  **40545 Düsseldorf (DE)**
- **RÖGL, Harald**
  **4702 Wallem an der Trattnach (AT)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(56) References cited:
**EP-A1- 2 424 018** **WO-A1-2017/172824**
**WO-A2-2019/068051** **CN-A- 104 829 813**
**CN-A- 104 829 814** **CN-A- 106 750 303**
**CN-A- 110 294 845** **CN-A- 111 040 137**
**CN-A- 111 269 401** **CN-A- 111 303 360**
**KR-A- 20200 046 471**

- **LI SU ET AL: "Anion conductive piperidinium based poly (ether sulfone): Synthesis, properties and cell performance", JOURNAL OF MEMBRANE SCIENCE, ELSEVIER BV, NL, vol. 594, 13 September 2019 (2019-09-13), XP085877527, ISSN: 0376-7388, DOI: 10.1016/J.MEMSCI.2019.117471 [retrieved on 2019-09-13]**
- **WANG FEN ET AL: "Synthesis and property of novel anion exchange membrane based on poly(aryl ether sulfone)s bearing piperidinium moieties", JOURNAL OF MEMBRANE SCIENCE, ELSEVIER BV, NL, vol. 591, 1 August 2019 (2019-08-01), XP085764659, ISSN: 0376-7388, DOI: 10.1016/J.MEMSCI.2019.117334 [retrieved on 2019-08-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention provides compounds, especially polymeric compounds, a process for preparation thereof and for the use of these compounds. Intended use is in field of electrochemistry. Anion-conducting properties of disclosed compounds making this material suitable for preparing anion-conducting membranes.

One important example for an electrochemical process is electrolysis of water to gain molecular hydrogen and molecular oxygen. The electrochemical aggregate used to perform such process is called electrolyzer. Such electrolyzer typically comprise many electrochemical cells. Each electrochemical cell comprises two compartments, each equipped with one gas evolving electrode and a membrane separating both compartments. To enable electrolytic splitting of water, the membrane needs to be conductive for ions (cations or anions), while almost impermeable for hydrogen and oxygen gas. Compounds discussed herein are intended to compose such membranes.

As the membranes of electrolyzers are in contact with water, they need to be stable against extensive swelling or deformation (wrinkling) caused by extensive water uptake within the polymeric structure. Extensive swelling may result in mechanical damage of membrane and lead to increased permeability of gases. For the sake of security, gas permeability needs to be limited. Otherwise, there is risk of oxyhydrogen explosion.

However, measures to increase stability against swelling shall not impair anionic conductivity of the material as this would result in poor process efficiency.

Similar requirements relate to membranes used in electrochemical cells performing other electrochemical processes in aqueous/hydrous environment. Examples are fuel cells, redox flow batteries and cells used for electrodialysis.

A polymeric anion-conducting material suitable for preparing a membrane to be used in electrolyzers is known from WO 2019/076860 A1. This material is characterized by at least one imidazole and/or imidazolium unit.

CN 104829814 A discloses a polymer containing a quaternized piperidine group. This polymer is used for preparing an anion exchange membrane as well.

A preparation method for a tertiary amine type polyarylether sulfone (ketone) polymer resin is known from CN110294845A. This polymer is used for preparing an anion exchange membrane.

From the patent literature, alternative polymers useful for preparation of anion exchange membranes are known: CN 104829813 A , CN 106750303 A, CN 111040137 A, CN 111269401 A, CN 111303360 A, EP 2424018 A1, KR 20200046471 A, WO 2017172824 A1, WO 2019068051 A2.

Preparation of polymers for anion exchange membranes is discussed in scientific literature as well, for instance by:

> Wang Fen et al.: Synthesis and property of novel anion exchange membrane based on poly (aryl ether sulfone)s bearing piperidinium moieties. Journal of Membrane Science, Vol. 591, pages 117334-117342 DOI: 10.1016/j.memsci.2019.117334
> and by
>
> Li Su et al.: Anion conductive piperidinium based poly (ehter sulfone): Synthesis, properties and cell performance. Journal of Membrane Science, vol. 594; pages 117471-117480 DOI: 10.1016/j.memsci.2019.117471

Several anion exchange membranes for water electrolysis are commercially available. A market overview has been compiled by Henkensmeier et al.:
Henkensmeier, Dirk and Najibah, Malikah and Harms, Corinna and Žitka, Jan and Hnát, Jaromir and Bouzek, Karel (2020) Overview: State-of-the Art Commercial Membranes for Anion Exchange Membrane Water Electrolysis. Journal of Electrochemical Energy Conversion and Storage, 18 (2), 024001. American Society of Mechanical Engineers (ASME). DOI: 10.1115/1.4047963 ISSN 2381-6872

An example for a commercially available anion exchange membrane is the product called fumasep® FAA-3-50, produced by FUMATECH BWT GmbH, 74321 Bietigheim-Bissingen, DE. According to Henkensmeier et al., this membrane is based on a polyaromatic polymer with ether bonds in the main chain and quaternary ammonium groups attached to the main chain.

The drawbacks of these known materials are extensive water uptake, extensive swelling, rare and expensive precursors, toxic and highly corrosive solvents, complicated preparation conditions being difficult for production at industrial scale. Therefore, these known materials have expensive preparation costs.

Thus, it is object of present invention to provide an easy-to-prepare material with proper anion-conducting properties and controlled swelling especially in aqueous environments. The precursors needed to synthesize the compound shall be inexpensive and synthesis process shall be suitable for industrial production.

Currently undisclosed international patent application PCT/EP2020/070153 relates to a polymeric anion-conducting membrane made from a compound containing at least one unit of the formula (0)

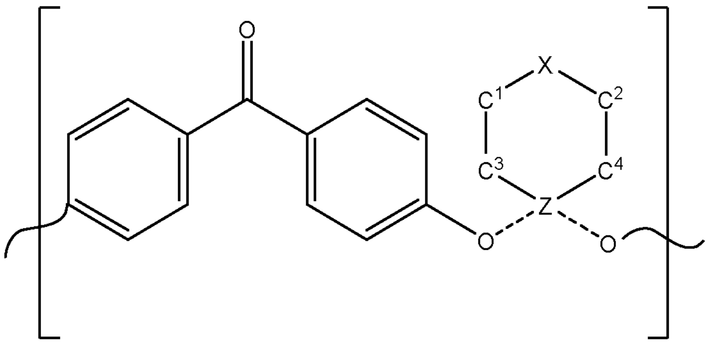

(0)

with X being a structure element comprising a nitrogen atom with a positive charge bonded to $C^1$ and $C^2$ and bonded via two bonds to one or two hydrocarbon radical(s) comprising 1 to 12, preferably 1 to 6, more preferably 1 or 5 carbon atoms and Z being a structure element comprising a carbon atom being bonded to $C^3$ and $C^4$ and at least one aromatic 6-ring directly bonded to one of the oxygen atoms, wherein the aromatic rings might be substituted with one or more halogen and/or one or more $C_1$- to $C_4$- alkyl radicals. This material already fulfills aforesaid requirements.

However, the inventors have surprisingly found that this problem can also be solved by the compounds according to the present invention as described hereinafter and in the claims as well.

The present invention therefore provides compounds as defined in the claims and described hereinafter.

Inventive compound is characterized by at least one unit of the formula (I)

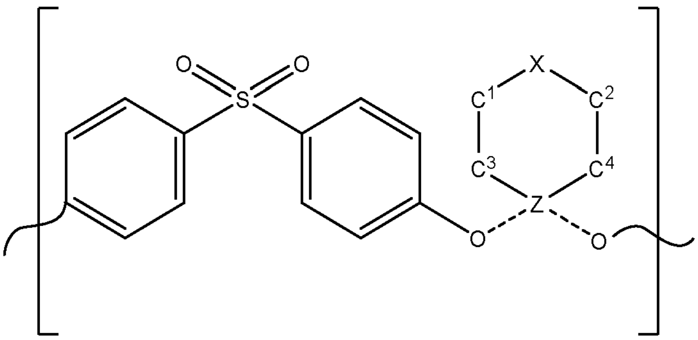

(I)

with X being a structure element comprising at least one nitrogen atom with a positive charge bonded to $C^1$ and $C^2$ and bonded via two bonds to one or two hydrocarbon radical(s) comprising 1

to 12, preferably 1 to 6, more preferably 1 or 5 carbon atoms and Z being a structure element comprising a carbon atom being bonded to $C^3$ and $C^4$ and at least one aromatic 6-ring directly bonded to one of the oxygen atoms, wherein said aromatic 6-ring is substituted in position 3 and 5 with the same or different alkyl group having from 1 to 4 carbon atoms, preferably being a methyl, iso-propyl or tert-butyl group, more preferably being a methyl group.

Thus, inventive compounds differ from compounds according to formula (0) at least by a sulfonic group.

The present invention likewise provides a process for preparing such compounds and for the use thereof as anion-conducting membranes in electrochemical cells.

The polymers according to the invention have the advantage that they can be prepared in a simple manner. Precursors are comparable cheap. Thus, preparation is cost efficient.

The membranes produced therefrom have the advantage that they have very high mechanical stability and low swelling characteristics combined with high dimensional stability. In addition, the membranes exhibit quite high anion conductivities. Therefore, inventive compounds are well suited separation active material of membranes, which are employed in electrochemical cells performing electrochemical processes in aqueous/hydrous environments.

In a preferred embodiment, inventive compound is represented by formula (Ia) or (Ib)

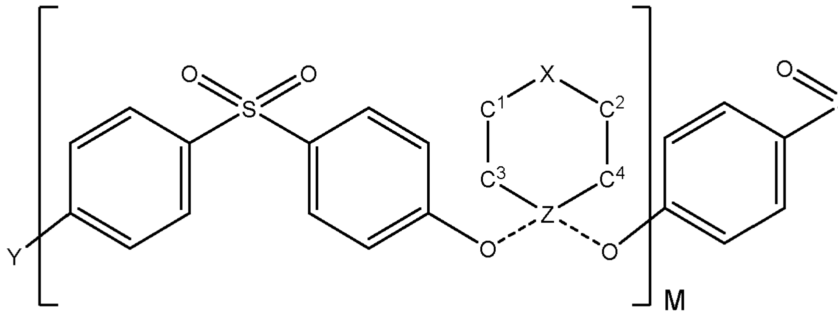

(Ia)

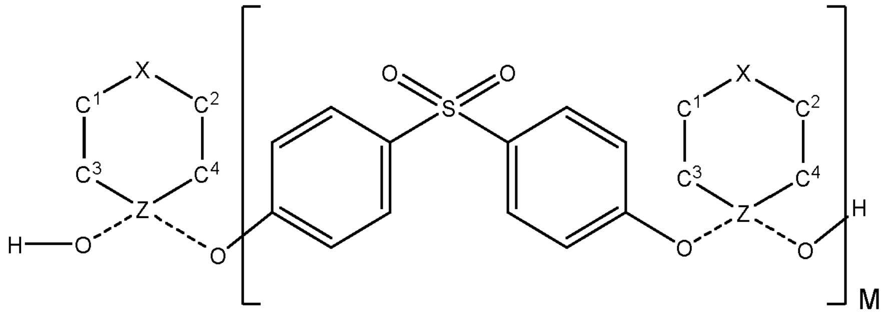

(Ib)

with Y = same or different halogen, preferably Y = F and with M being an integer from 1 to 1000, preferably M being an integer from 5 to 500.

According to a preferred embodiment of present invention, structure element X represents a unit of formula (IIa), (IIb) or (IIc)

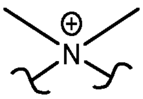

(IIa)

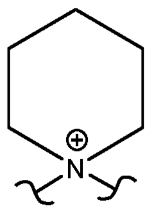

(IIb)

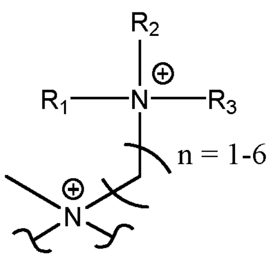

(IIc)

with $R^1$, $R^2$ and $R^3$ being the same or different alkyl group having from 1 to 6 carbon atoms and two nitrogen atoms being connected with an aliphatic chain having from 1 to 6 carbon atoms (n = 1-6), $R^1$, $R^2$ and $R^3$ each preferably being a methyl group.

Most preferably, structure element X present represents in more than 5 %, preferably in more than 50 %, and most preferred in more than 90 % of its occurrence a unit of formula (IIa), (IIb) or (IIc). The occurrence can be determined for example by classical $^1$H-NMR performed accordingly to 01/2005:20233 (EUROPEAN PHARMACOPOEIA 5.0. 2.2.33.

Nuclear magnetic resonance spectrometry) at room temperature in DMSO-d6 as solvent. The occurrence can be calculated via integration of the area of corresponding signal and comparison of normalized area of corresponding signal (peak) with the number of corresponding protons in a target unit, e.g. a unit of formula (IIa) contains 6 hydrogen atoms and as presented in Fig. 2 the normalized area of corresponding signal (labeled with 5) is equal to 6.003. This indicate that the occurrence of a unit of formula (IIa) in the analyzed polymer from Example 3 is equal to 100% (calculated as 6.003 / 6 * 100% = 100%)".

According to a further preferred embodiment of the invention, the structure element Z of the compound represents a unit of formula (III)

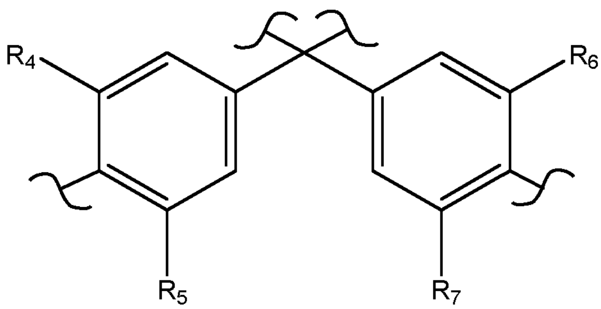

(III)

with $R_4$, $R_5$, $R_6$ and $R_7$ being the same or different alkyl group having from 1 to 4 carbon atoms, $R_4$, $R_5$, $R_6$ and $R_7$ each preferably being a methyl, iso-propyl or tert-butyl group, more preferably being a methyl group.

Six preferred embodiments of inventive compound are represented by at least one of formulas (IVa) to (IVf):

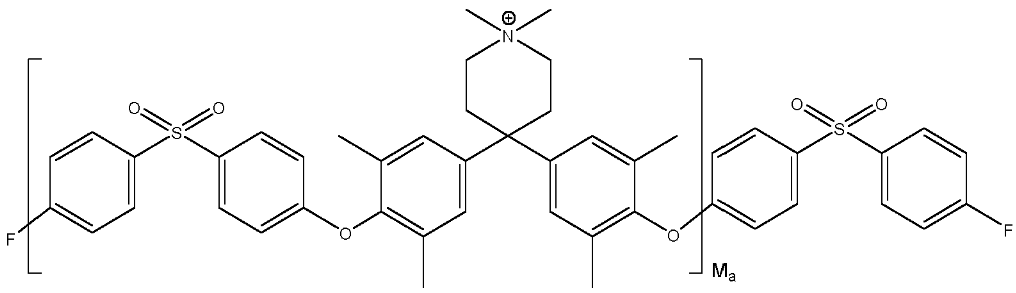

(IVa)

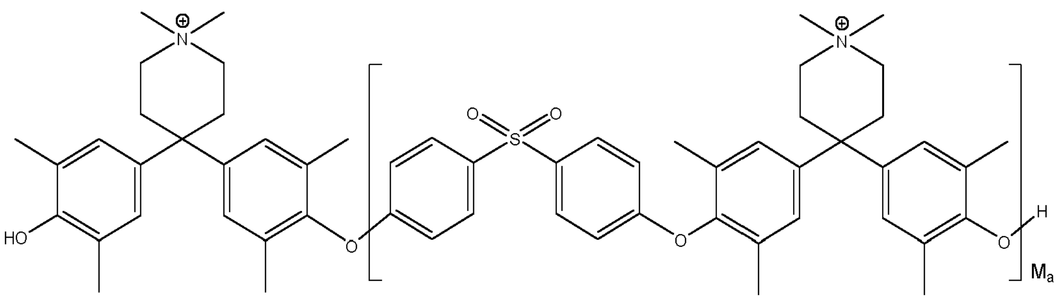

(IVb)

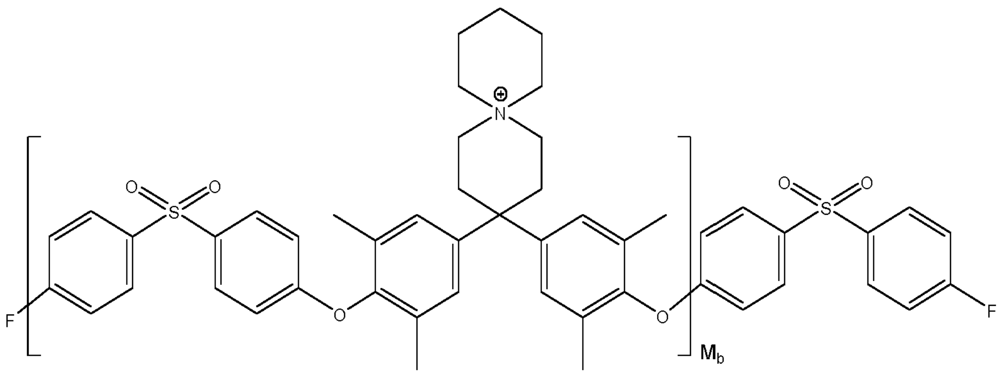

(IVc)

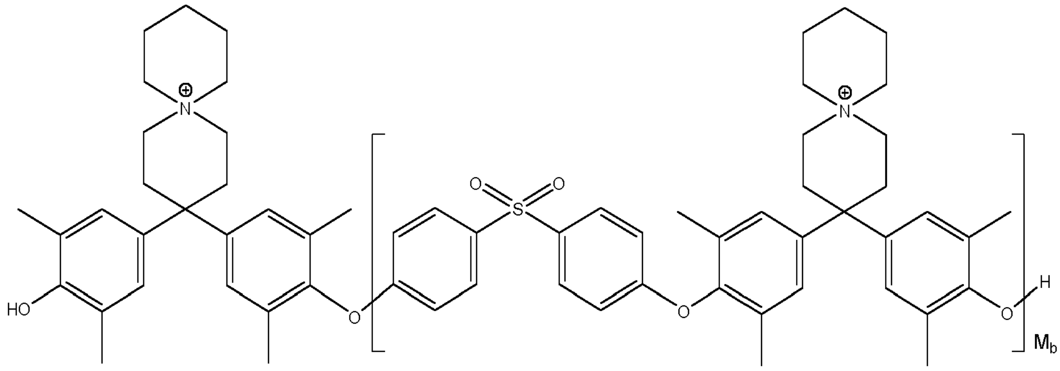

(IVd)

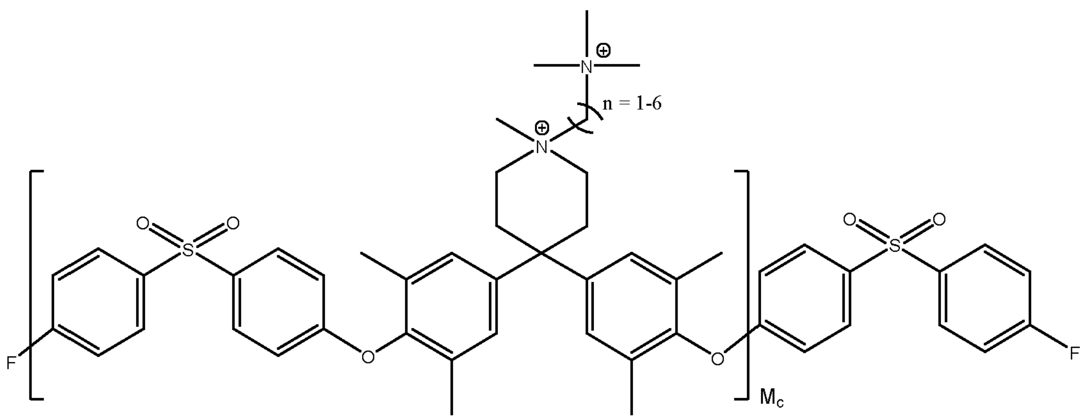

(IVe)

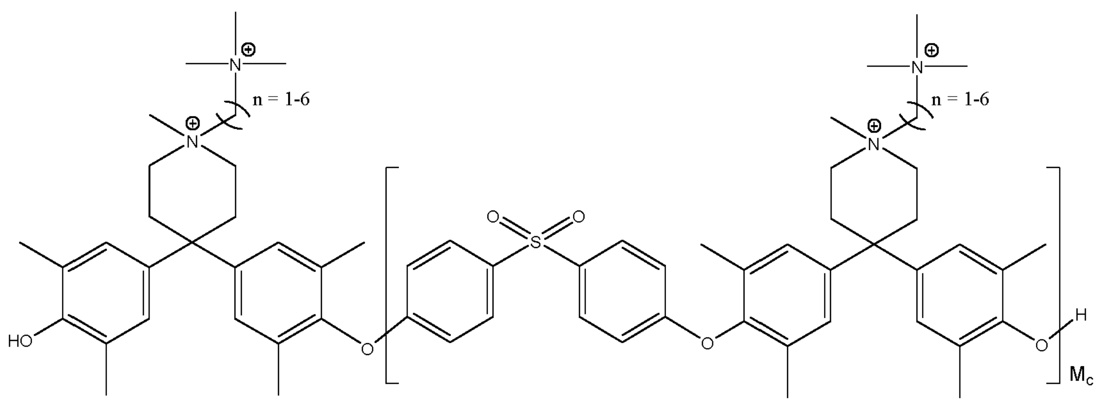

(IVf)

with $M_a$, $M_b$ and $M_c$ each being an integer of from 1 to 1000, preferably $M_a$, $M_b$ and $M_c$ each being an integer of from 5 to 500.

Even more preferred compounds are cross-linked ones as represented by at least one of formulas (Va) to (Vd):

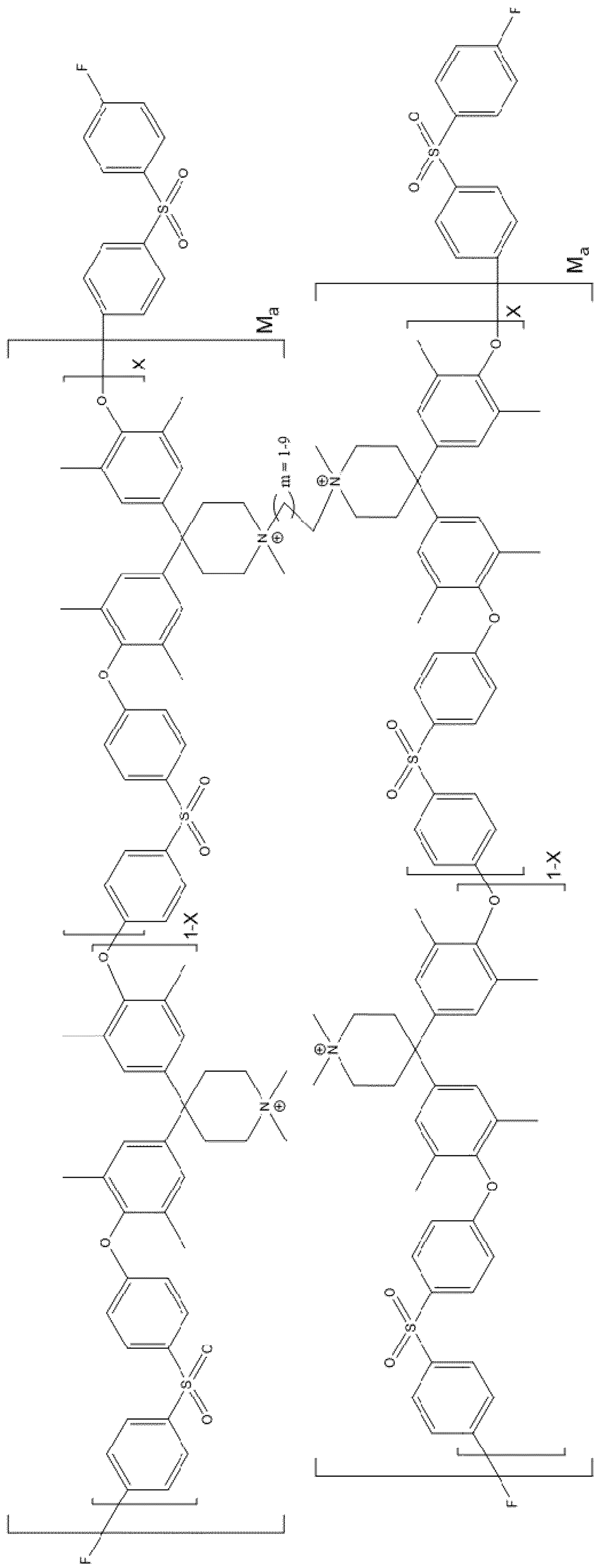

(Va)

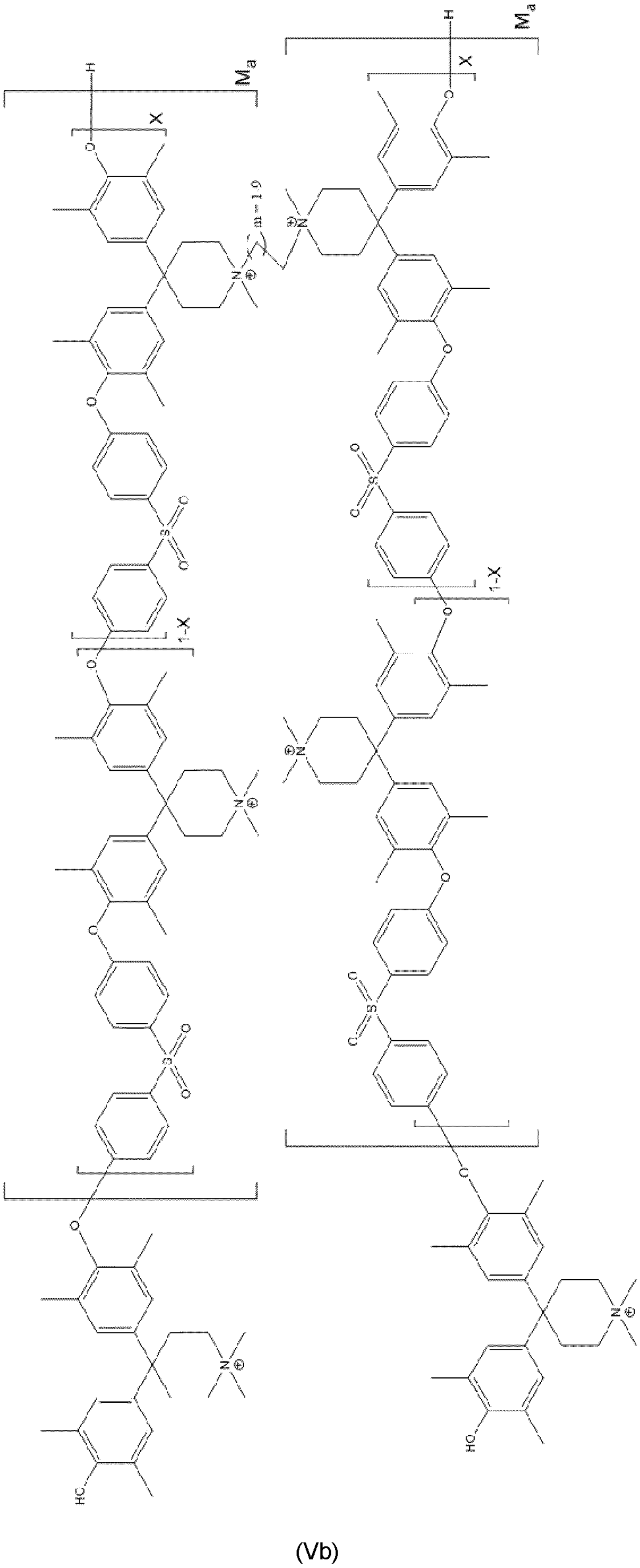

(Vb)

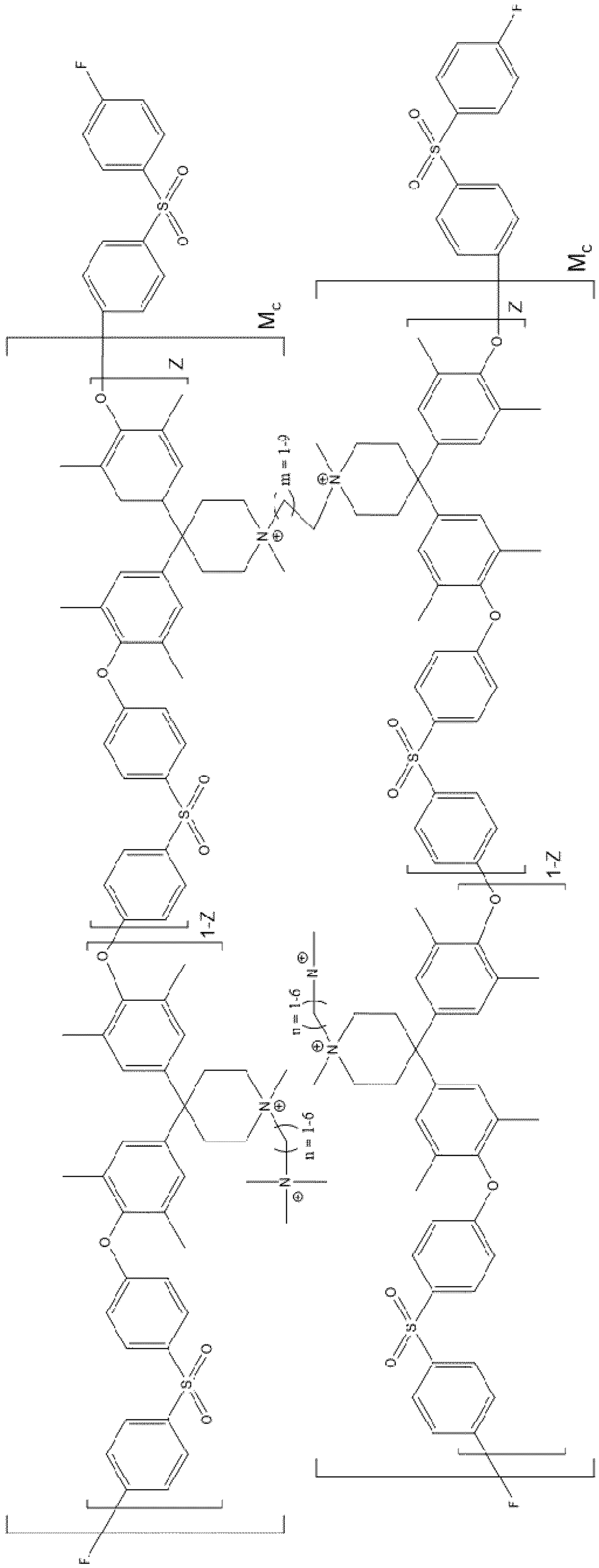

(Vc)

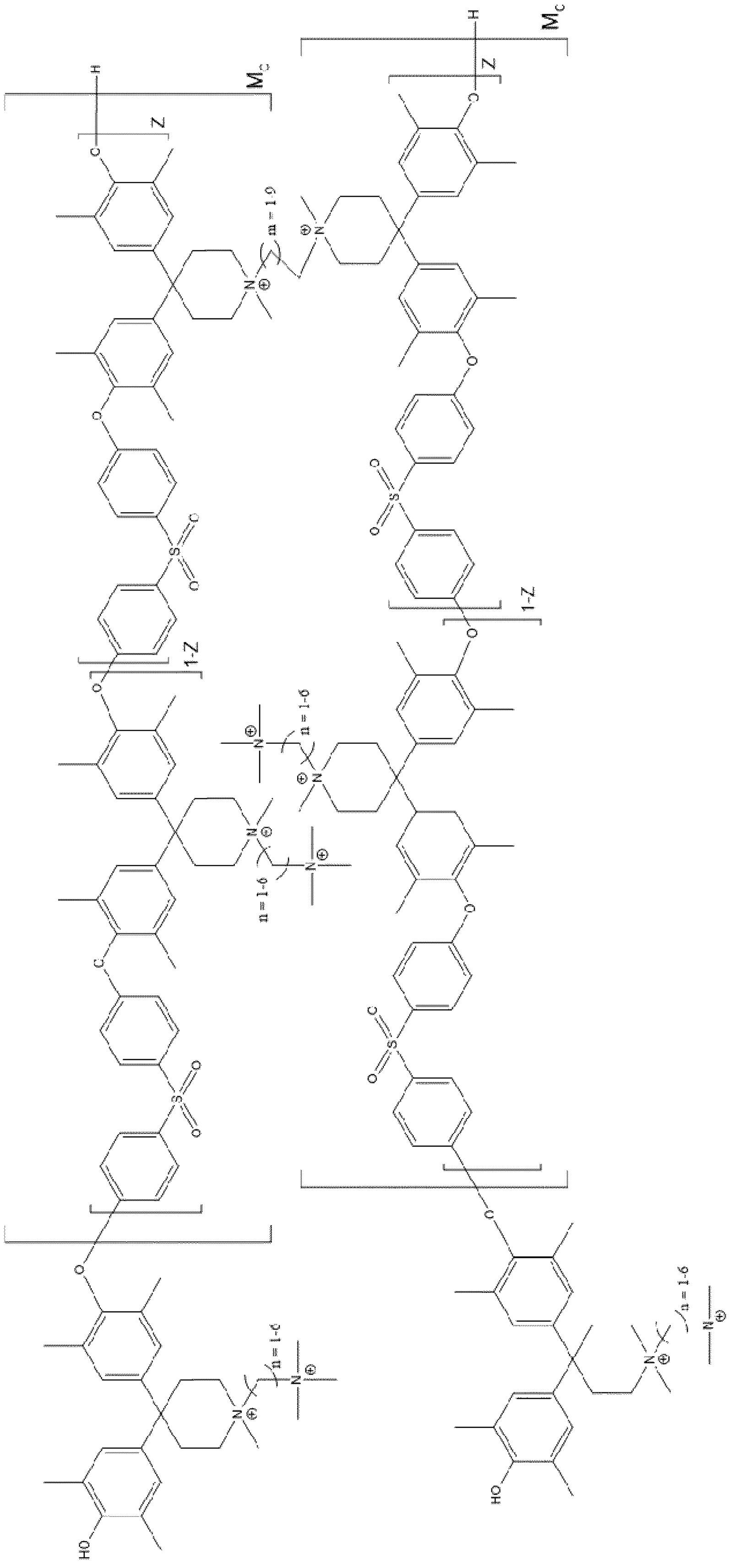

(Vd)

with at least two polymer chains being connected with an aliphatic chain having from 1 to 10 carbon atoms (m = 1-9), with $M_a$, $M_b$ and $M_c$ each being an integer from 1 to 1000, preferably with $M_a$, $M_b$ and $M_c$ each being an integer from 5 to 500, with X and Z each being between 0.01 and 0.5, preferably with X and Z each being between 0.01 and 0.25.

As derivable from the formulae (I), (Ia), (Ib), (IVa) to (IVf) and (Va) to (Vd) and related definitions, all inventive compounds comprising an aromatic 6-ring which is directly bonded to one of the oxygen atoms, which is substituted in position 3 and 5 with the same or different alkyl group having from 1 to 4 carbon atoms.

According a first variant of the invention, said aromatic 6-ring is further substituted with one or more halogen and/or one or more $C_1$- to $C_4$- alkyl radicals.

According to a second, preferred variant of the invention, said aromatic 6-ring is free of any further substitution with one or more halogen and/or one or more $C_1$- to $C_4$- alkyl radicals. Precursor materials for preparing such compounds are cheaper. Thus, preparation and final compound is less cost intensive.

Yet another object of the present invention is to provide a process for preparing inventive compounds.

This object is solved by a process that comprises a step in which a compound of the formula (VI), where Y is same or different halogen, preferred F,

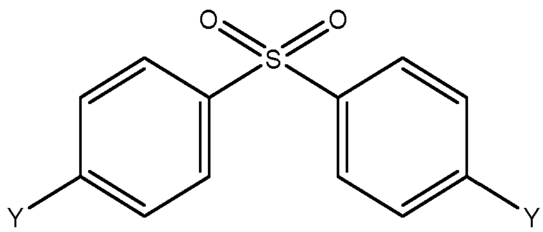

(VI)

is reacted with one or both compounds selected from formulas (VIIa) or/and (VIIb)

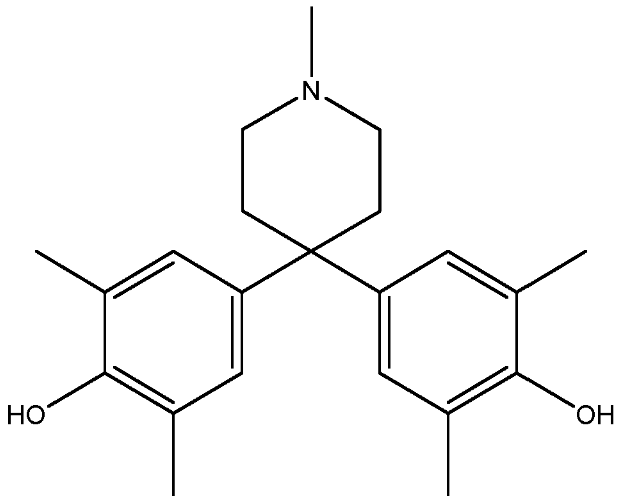

(VIIa)

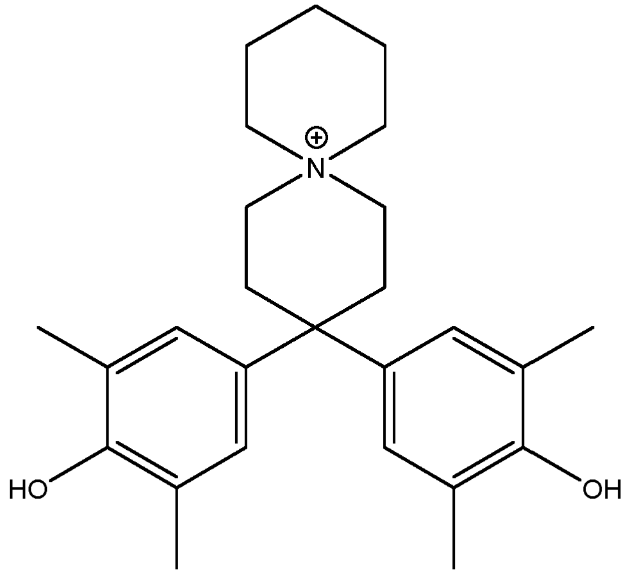

(VIIb)

wherein the aromatic rings might further be substituted with one or more halogen and/or one or more $C_1$- to $C_4$- alkyl radicals. In case compound (Vila) is used, an additional step (quaternization of nitrogen atom) is required and can be easily performed using an alkylating reagent.

Such process is quite simple to conduct and yields desired compounds.

Preferably, this reaction step is carried out at a temperature of from 100 °C to 300 °C, more preferably at a reaction temperature of from 125 °C to 175 °C. Most preferably the reaction step is carried out at a temperature where the reaction mixture is boiling, preferably while stirring. The reaction step is most preferably carried out under an inert gas atmosphere, preferably a nitrogen atmosphere. At the top of the reaction vessel, any water formed is preferably removed.

The reaction step is preferably carried out in the presence of a base like KOH, NaOH, $K_2CO_3$ or $Na_2CO_3$. Preferred base is $K_2CO_3$

The reaction step is carried out in the presence of an organic solvent. Preferred solvents are selected from the list consisting of N-Methyl-2-pyrrolidone (NMP), Dimethyl sulfoxide (DMSO), N,N-Dimethylformamide (DMF) and N,N-Dimethylacetamide (DMAC). Preferably N,N-Dimethylacetamide is used as a solvent.

Preferably the process according to the invention comprises a step where an alkylating reagent, preferably a methylating reagent, is used. The preferred methylating agent used is iodomethane.

According to a preferred inventive preparation method, the aromatic rings in the compounds of formula (VI), (VIIa) and (VIIb) are free of any further substitution with one or more halogen or one or more $C_1$- to $C_4$- alkyl radicals.

The compounds of the present invention might be used for different purposes. Preferably the compounds of the present invention are polymers and are used as anion-conducting membranes or for the production of anion-conducting membranes. Such use is a further object of present invention.

Within such membranes inventive compounds serve as separation active material due to their excellent anion-conducting properties, while being very gas tight. Beside inventive compounds, mentioned membranes may comprise further materials, for instance porous support, e.g. a fabric or non-woven material.

Thanks to designed properties of the component disclosed herein, an anion-conducting membrane comprising such material may be employed in an electrochemical cell. Thus, another embodiment of the invention is an electrochemical cell having an anion-conducting membrane, wherein said anion-conducting membrane comprises inventive compound.

The excellent water stability of present compounds makes this material suitable for employment in electrolyzers or a fuel cells or redox flow batteries. Thus, each a preferred embodiment of inventive electrochemical cell is an electrolyzer, a fuel cell or a redox flow battery.

Performing an electrochemical process by means of an inventive electrochemical cell is another embodiment of the invention.

Preferably, said electrochemical process is an electrolysis or an electrodialysis or an electrochemical process taking place during operation of a fuel cell or an electrochemical process taking place during operation of a redox flow battery.

Further details of present invention are derivable from the examples and accompanying figures. The latter show:

**Figure 1:** $^1$H-NMR spectrum of monomer (VIIa)
**Figure 2:** $^1$H-NMR spectrum of quaternized piperidine containing polymer from Example 3
**Figure 3:** $^1$H-NMR spectrum of monomer (VIIb)
**Figure 4:** $^1$H-NMR spectrum of spiro containing polymer from Example 6
**Figure 5:** $^1$H-NMR spectrum of piperidine containing polymer quaternized with (2-Bromoethyl)-trimethylammonium bromide from Example 8

**Examples:**

**Example 1: Synthesis of piperidine containing monomer (VIIa)**

One 500 ml three-necked flask with internal thermometer, heating with magnetic stirrer and reflux cooler was fed with 150 g of acetic acid, 17 g (0.15 mol) of N-Methylpiperidone, 49 g (0.40 mol) of 2,6-Dimethylphenol and 30 g of concentrated hydrochloric acid. Subsequently, this solution was heated under stirring to 90°C. Over the reaction time a significant part of the product precipitated. After 40 hours, the reaction mass was cooled to room temperature. The crystallized precipitate was filtered off, washed three times with a small amount of acetic acid and suspended in a mixture of 250 g of water with 400 g of ethanol. Subsequently, the suspension was heated to 80°C leading to dissolution of suspended solid. By adding ammonia solution 4,4-bis-(4-hydroxy-3,5-dimethyl-phenyl)-1-methyl-piperidine monomer (VIIa) was precipitated. After cooling to room temperature this was filtered off, the filter cake was 3 times washed with water and dried overnight in vacuum at 40°C. Chemical structure of monomer (VIIa) was confirmed by $^1$H-NMR; $^1$H-NMR spectrum is given in Figure 1. DMSO-d6 was used as solvent.

**Example 2: Synthesis of piperidine containing polymer**

Synthesis was performed in a 500 mL three-necked flask with oil bath, mechanical stirrer, a packed column with distillation head cooler with adjustable return ratio and condensate removal. At the beginning of synthesis 16.98 g (0.05 mol) of piperidine containing monomer (VIIa) from Example 1, 12.72 g (0.05 mol) of 4,4'-Difluordiphenylsulfon, 180 mL of N,N-Dimethylacetamide and 15.21 g (0.011 mol) of finely ground $K_2CO_3$ were mixed under nitrogen atmosphere over one hour at room temperature. Afterwards the temperature of the reaction mixture was increased to 120°C and generated water was removed using the column over 4 hours. After four hours additional 18 mL of N,N-Dimethylacetamide were added to the reaction mixture and temperature of the reaction mixture was increased to 165°C. After 20 hours the heating of the oil bath was turned off, the viscous reaction product was cooled down and poured into cold water. The precipitated product was washed with hot water three times and was dried under vacuum at 40°C over 48 hours. The yield was 25.53 g (92.2%).

**Example 3: Quaternization of piperidine containing polymer from Example 2**

10 g of the polymer from Example 2 were dissolved in 40 mL of N,N-Dimethylacetamide under stirring at 60°C for one hour. After cooling of the polymer solution down to 30°C dropwise 2.8 mL of iodomethane were added to the polymer solution and polymer solution was stirred for 24 hours at 30°C leading to quaternization of the polymer. Chemical structure of quaternized piperidine containing polymer from Example 3 was confirmed by $^1$H-NMR; $^1$H-NMR spectrum is given in Figure 2. DMSO-d6 was used as solvent.

**Example 4: Membrane casting of piperidine containing polymer from Example 3**

The solution of the quaternized polymer from Example 3 was directly used for preparation of the membrane. The required amount of polymer solution was taken up with a syringe and applied directly through a 1 μm PTFE filter on a glass plate preheated to 40°C. For the coating of the glass plate, an applicator with doctor blade was automatically pulled over the glass plate at a speed of 5 mm/s. The applied wet layer was pre-dried for 24 hours under $N_2$ atmosphere at room temperature and then finally dried for 6 hours at 60°C under vacuum.

**Example 5: Synthesis of spiro containing monomer (VIIb)**

In a 2 L three-necked flask with magnetic stirrer, temperature control and condenser 36 g (0.26 mol) of $K_2CO_3$ were dissolved in 150 ml of EtOH. Then 57.3 g (0.40 mol) of 1,4-Dioxa-8-azaspiro[4,5] decane were dissolved in 800 ml of EtOH and transferred in three-necked flask. After that temperature was regulated to 35°C. Subsequently, a solution of 92 g (0.40 mol) of 1,5-Dibrompentane in 150 ml of EtOH was added dropwise over 12 hours. After 70 hours reaction products were cooled to room temperature, precipitated KBr was separated by filtration and the solution was concentrated

on a rotary evaporator. During concentration process additional amount of KBr crystallizes and was filtered off. The filtrate solidified at temperature below 80°C, was filtered and used without further purification as one of educts for synthesis of spiro containing monomer (VIIb).

In a 500 ml round bottom flask with magnetic stirrer and oil bath 51.5 g (0.177 mol) of the molecule described above and 0.44 mol of 2,6-Dimethylphenol and 20 g (0.21 mol) of methanesulfonic acid, 1 g of water and 0.90 g (0.005 mol) of Sodium 3-mercapto-1-propanesulfonate were stirred for 70 hours at 100°C. The mixture was cooled to room temperature and mixed three times with 200 g of water. After that it was distilled at 1 kPa (10 mbar) pressure to remove volatile substances. Spiro containing monomer (VIIb) partially solidified and was two times recrystallized in 25 vol% mixture of EtOH in water. Finally, it was dried overnight in vacuum at 40°C. Chemical structure of monomer (VIIb) was confirmed by $^1$H-NMR; $^1$H-NMR spectrum is given in Figure 3. DMSO-d6 was used as solvent.

**Example 6: Synthesis of spiro containing polymer**

Synthesis was performed in a 250 mL three-necked flask with oil bath, mechanical stirrer, a packed column with distillation head cooler with adjustable return ratio and condensate removal. At the beginning of synthesis 4.89 g (0.01 mol) of spiro containing monomer (VIIb) from Example 5, 2.54 g (0.01 mol) of 4,4'-Difluordiphenylsulfon, 45 mL of N,N-Dimethylformamide and 3.03 g (0.022 mol) of finely ground $K_2CO_3$ were mixed under nitrogen atmosphere over one hour at room temperature. Afterwards the temperature of the reaction mixture was increased to 120°C and generated water was removed using the column over 4 hours. After four hours additional 5 mL of N,N-Dimethylformamide were added to the reaction mixture and temperature of the reaction mixture was increased to 154°C. After 20 hours the heating of the oil bath was turned off, the viscous reaction product was cooled down and poured into cold water. The precipitated product was washed with hot water three times and was dried under vacuum at 40°C over 48 hours. The yield was 6.21 g (88.3%). Chemical structure of spiro containing polymer from Example 6 was confirmed by $^1$H-NMR; $^1$H-NMR spectrum is given in Figure 4. DMSO-d6 was used as solvent.

**Example 7: Membrane casting of spiro containing polymer from Example 6**

5 g of polymer from Example 6 were dissolved in 20 mL of N,N-Dimethylformamide under stirring at 60°C for one hour. The required amount of polymer solution was taken up with a syringe and applied directly through a 1 μm PTFE filter on a glass plate preheated to 40°C. For the coating of the glass plate, an applicator with doctor blade was automatically pulled over the glass plate at a speed of 5 mm/s. The applied wet layer was pre-dried for 24 hours under $N_2$ atmosphere at room temperature and then finally dried for 6 hours at 60°C under vacuum.

**Example 8: Quaternization of piperidine containing polymer with (2-Bromoethyl)-trimethylammonium bromide**

5 g of the polymer from Example 2 were dissolved in 20 mL of N,N-Dimethylacetamide under stirring at 60°C for one hour and 4.46 g of (2-Bromoethyl)-trimethylammonium bromide were dissolved in 10 mL of N,N-Dimethylacetamide. Solution of (2-Bromoethyl)-trimethylammonium bromide was dropwise added to the polymer solution and polymer solution was stirred for 48 hours at 100°C leading to quaternization of the polymer. Chemical structure of piperidine containing polymer quaternized with (2-Bromoethyl)-trimethylammonium bromide was confirmed by $^1$H-NMR; $^1$H-NMR spectrum is given in Figure 5. DMSO-d6 was used as solvent.

**Example 9: Membrane casting of piperidine containing polymer from Example 8**

The solution of the quaternized polymer from Example 8 was directly used for preparation of the membrane. The required amount of polymer solution was taken up with a syringe and applied directly through a 1 μm PTFE filter on a glass plate preheated to 40°C. For the coating of the glass plate, an applicator with doctor blade was automatically pulled over the glass plate at a speed of 5 mm/s. The applied wet layer was pre-dried for 24 hours under $N_2$ atmosphere at room temperature and then finally dried for 6 hours at 60°C under vacuum.

**Example 10: Partial quaternization of piperidine containing polymer from Example 2**

5 g of the polymer from Example 2 were dissolved in 20 mL of N,N-Dimethylacetamide under stirring at 60°C for one hour and 0.25 mL of iodomethane were dissolved in 5 mL of N,N-Dimethylacetamide. After cooling of the polymer solution down to 30°C solution of iodomethane was dropwise added to the polymer solution and polymer solution was stirred for 24 hours at 30°C leading to partial quaternization of the polymer.

**Example 11: Crosslinking and membrane casting of polymer from Example 10**

0.15 g of 1,6-Diiodohexane were dissolved in 5 mL of N,N-Dimethylacetamide and dropwise added to the polymer solution from Example 10. The polymer solution was steered for additional 10 minutes at 30°C and directly used for casting of the membrane. The required amount of polymer solution was taken up with a syringe and applied directly through a 1 μm PTFE filter on a glass plate preheated to 40°C. For the coating of the glass plate, an applicator with doctor blade was automatically pulled over the glass plate at a speed of 5 mm/s. The applied wet layer was covered with metal cover to slow down the evaporation of the solvent and coated glass plate was heated in the oven for 48 hours at 80°C. Finally, the membrane was dried for 6 hours at 60°C under vacuum without metal cover. Obtained membrane was insoluble in DMSO-d6.

**Example 12: Ion exchange of membranes**

The membranes prepared in Examples 4, 7, 9 and 11 respectively were ion-exchanged: Samples of the membranes were placed in fresh portions of 1 M KOH solution 3 times for 1 hour each at 60°C and subsequently in fresh portion of 1 M KOH solution for 24 hours at 60°C. Afterwards the membrane samples were rinsed off with deionized water and placed in fresh portions of the deionized water 3 times for 1 hour each at 60°C. Subsequently, the membrane samples were stored in a fresh portion of the deionized water overnight at 60°C and finally rinsed with deionized water at room temperature. Commercially available anion exchange membrane FAA-3-50 was ion exchanged in the same way.

**Example 13: Measurement of ionic conductivity (IC)**

The ionic conductivity (IC) of ion-exchanged membrane samples from Example 12 were measured by means of impedance spectroscopy (EIS) in a conventional 4-electrode arrangement. The membrane sample was mounted in a commercial BT-112 cell (Bekk Tech LLC), so that the two outer Pt wires were placed under the sample and the two midpoint Pt wires above the sample. The BT-112 cell was mounted between 2 PTFE plates and filled with deionized water. The temperature of the deionized water was controlled by a water bath and deionized water was pumped permanently through the cell. The calculation of the membrane resistance ($R_{membrane}$) was carried out by fitting acquired EIS spectrum using a widely used R (RC) Randles equivalent circuit.

The ionic conductivity ($\sigma$) of the membrane sample is given by Equation (1):

$$\sigma = L / (R_{membran} * A) \qquad (1)$$

where L is the distance between Pt wires (5 mm) and A is the area of the membrane sample between the two outer Pt wires. Each measurement was repeated for 3 samples per each membrane and a mean ± standard deviation was calculated. Commercially available anion exchange membrane FAA-3-50 was tested in the same way. The results of the measurements are given in Table 1.

**Example 14: Measurement of water uptake (WU)**

Ion-exchanged membrane samples from Example 12 (3 samples per each membrane tested) were used for measurement of water uptake (WU). All samples were dried for 24 hours in a vacuum oven at 40 °C and 2.5 kPa (25 mbar), then cooled in a desiccator to room temperature and weighted. For the measurement of the water uptake, membrane samples were stored for 24 hours in deionized water at 25 °C. Subsequently, the weight of each sample was determined again. For this purpose, adhering water was removed from the membrane with the aid of a filter paper. Each measurement was repeated 3 times and a mean ± standard deviation was calculated.

The water uptake (WU) results from Equation (2):

$$WU = (m_{wet} - m_{dry}) / m_{dry} * 100\% \qquad (2)$$

with $m_{wet}$ the mass of the sample after swelling and $m_{dry}$ the mass of the sample after drying. Commercially available anion exchange membrane FAA-3-50 was tested in the same way. The results of the measurements are given in Table 1.

**Example 15: Measurement of dimensional stability (DS)**

Ion-exchanged membrane samples from Example 12 (3 samples per each membrane tested) were used for

the measurement of dimensional stability (DS). All samples were dried for 24 hours in a vacuum oven at 40 °C and 2.5 kPa (25 mbar), then cooled in a desiccator to room temperature. Such parameters as the sample length, the sample width and the sample thickness were determined. To determine the swelling behavior, membrane samples were stored for 24 hours in deionized water at 25 °C. Subsequently, the sample length, the sample width and the sample thickness were determined again. For this purpose, adhering water was removed from the membrane with the aid of a filter paper. Each measurement was repeated 3 times and a mean ± standard deviation was calculated.

The swelling behavior in length (referred as $DS_l$), width (referred as $DS_w$) and thickness (referred as DSt) was calculated by Equation (3):

$$DS_x = (x_{wet} - x_{dry}) / x_{dry} * 100\% \qquad (3)$$

with $x_{wet}$ the length, width or thickness of the sample after swelling and $x_{dry}$ the dry length, dry width or dry thickness of the sample. DS value is calculated as $(DS_l + DS_w + DS_t)/3$. Commercially available anion exchange membrane FAA-3-50 was tested in the same way. The results of the measurements are given in Table 1.

**Table 1:** Experimental data obtained according to Examples 13 to 15 with membranes from Example 4 labeled as Membrane 1, from Example 7 labeled as Membrane 2, from Example 9 labeled as Membrane 3 and from Example 11 labeled as Membrane 4 and commercially available anion exchange membrane FAA-3-50 labeled as FAA-3-50.

| **Label** | **Qualification** | **WU [%]** | **DS [%]** | **IC [mS/cm]** |
|---|---|---|---|---|
| Membrane 1 | inventive | 47.1 ± 2.1 | 15.4 ± 1.7 | 76.9 ± 3.1 |
| Membrane 2 | inventive | 36.4 ± 2.4 | 12.1 ± 2.1 | 43.7 ± 2.3 |
| Membrane 3 | inventive | 59.9 ± 2.9 | 19.1 ± 1.9 | 63.8 ± 2.6 |
| Membrane 4 | inventive | 33.7 ± 2.5 | 11.7 ± 1.5 | 54.4 ± 2.8 |
| FAA-3-50 | conventional | 78.5 ± 3.3 | 65.1 ± 2.6 | 33.7 ± 3.4 |

FAA-3-50 is a commercially available anion exchange membrane from FUMATECH BWT GmbH, 74321 Bietigheim-Bissingen, DE.

It can be seen from Table 1, that the membranes according to the invention show up to two times higher ionic conductivity combined with at least three times better dimensional stability and up to two times lower water uptake compared to commercially available anion-conducting membrane FAA-3-50.

## Claims

1. Compound containing at least one unit of the formula (I)

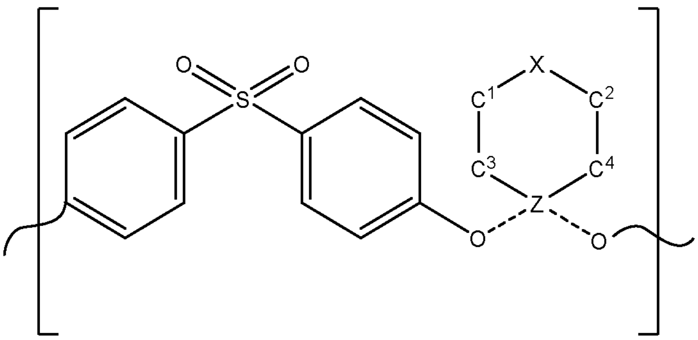

(I)

with X being a structure element comprising at least one nitrogen atom with a positive charge bonded to $C^1$ and $C^2$ and bonded via two bonds to one or two hydrocarbon radical(s) comprising 1 to 12, preferably 1 to 6, more preferably 1 or 5 carbon atoms and Z being a structure element comprising a carbon atom being bonded to $C^3$ and $C^4$ and at least one aromatic 6-ring directly bonded to one of the oxygen atoms, wherein said aromatic 6-ring is substituted

in position 3 and 5 with the same or different alkyl group having from 1 to 4 carbon atoms, preferably being a methyl, iso-propyl or tert-butyl group, more preferably being a methyl group.

**2.** Compound according to Claim 1, **characterized in that** the compound is represented by formula (Ia) or (Ib)

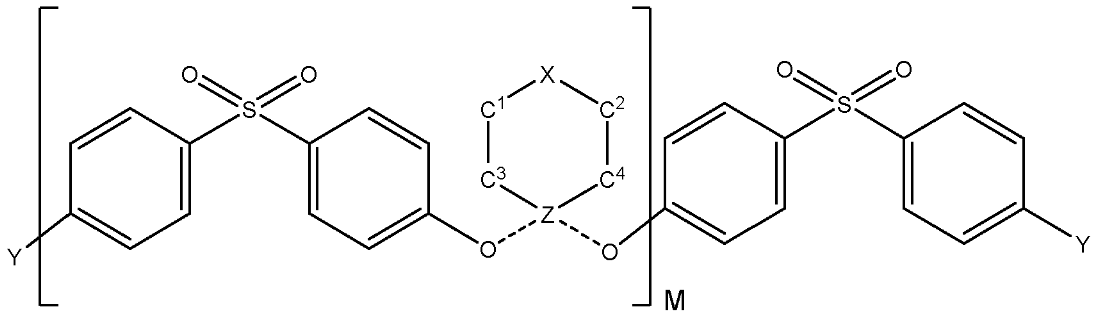

(Ia)

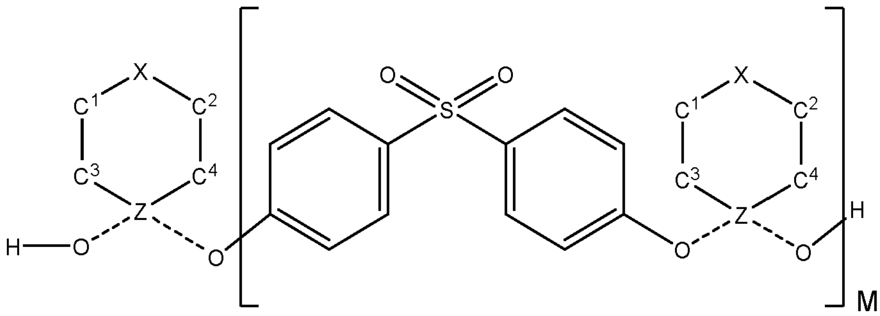

(Ib)

with Y = same or different halogen, preferably Y = F and with M being an integer from 1 to 1000, preferably M being an integer from 5 to 500.

**3.** Compound according to Claim 1 or 2, **characterized in that** the structure element X represents a unit of formula (IIa), (IIb) or (IIc)

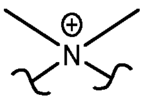

(IIa)

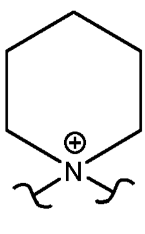

(IIb)

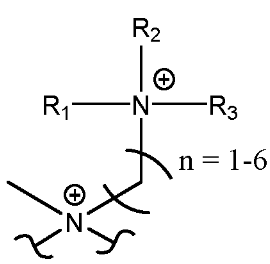

(IIc)

with $R^1$, $R^2$ and $R^3$ being the same or different alkyl group having from 1 to 6 carbon atoms and two nitrogen atoms being connected with an aliphatic chain having from 1 to 6 carbon atoms (n = 1-6), $R^1$, $R^2$ and $R^3$ each preferably being a methyl group.

4. Compound according to any one of Claims 1 to 3, **characterized in that** the structure element X present in the compound represents in more than 5 %, preferably in more than 50 %, and most preferred in more than 90 % of its occurrence a unit of formula (IIa), (IIb) or (IIc).

5. Compound according to any one of Claims 1 to 4, **characterized in that** the structure element Z represents a unit of formula (III)

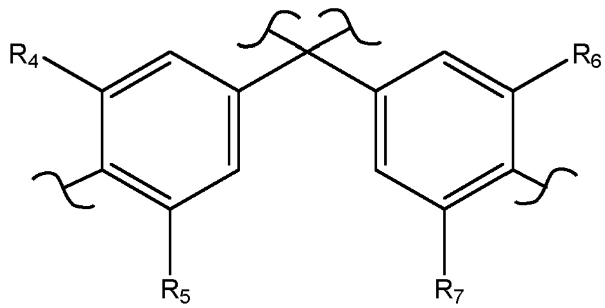

(III)

with $R_4$, $R_5$, $R_6$ and $R_7$ being the same or different alkyl group having from 1 to 4 carbon atoms, $R_4$, $R_5$, $R_6$ and $R_7$ each preferably being a methyl, iso-propyl or tert-butyl group, more preferably being a methyl group.

6. Compound according to at least one of Claims 1 to 5, **characterized in that** the compound is represented by at least one of formulas (IVa) to (IVf):

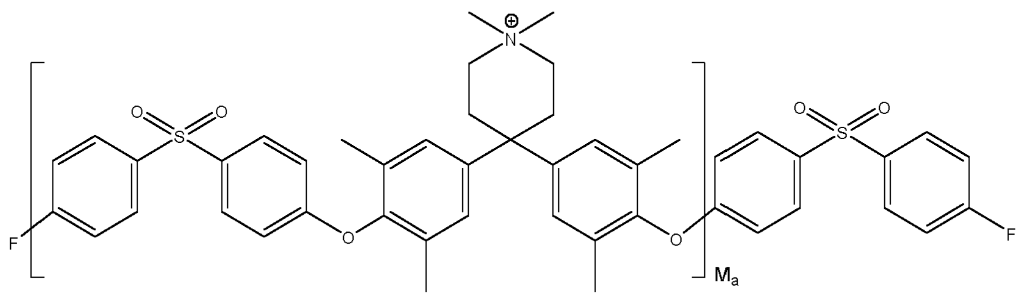

(IVa)

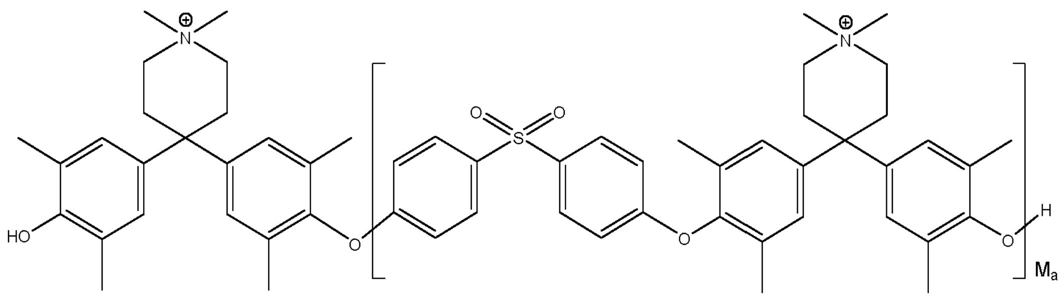

(IVb)

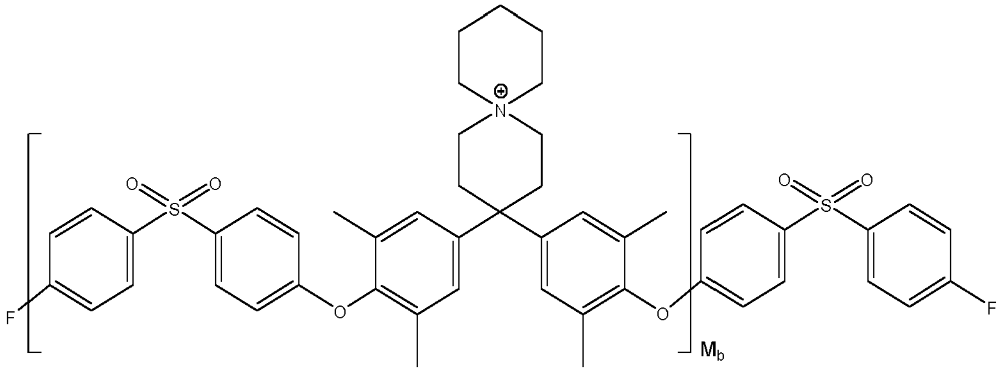

(IVc)

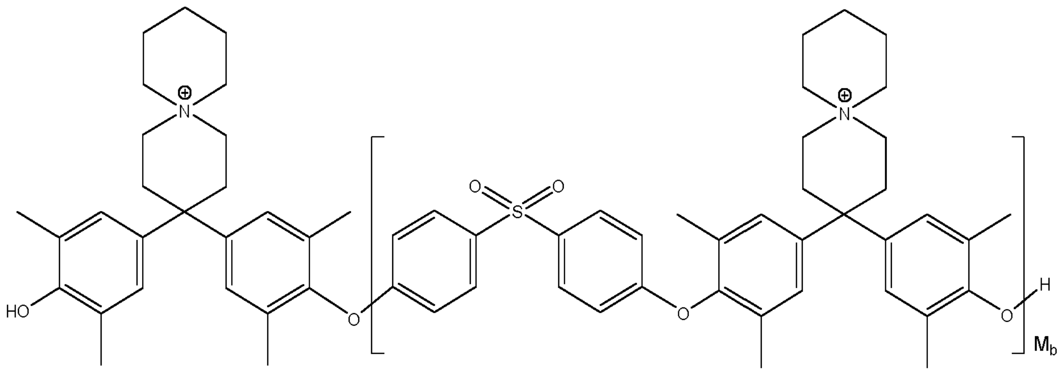

(IVd)

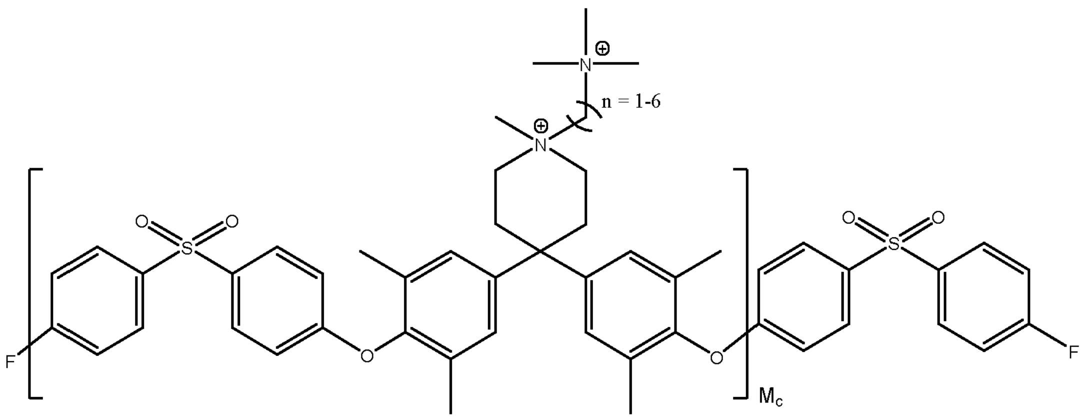

(IVe)

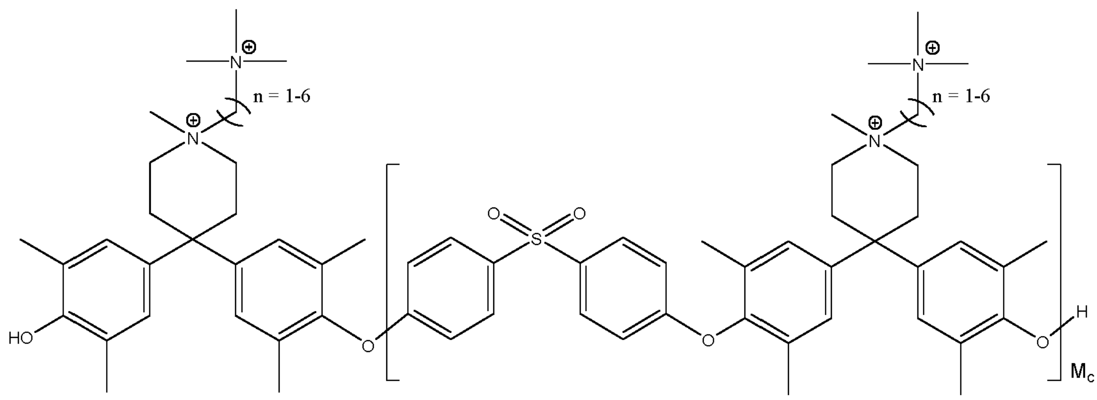

(IVf)

with $M_a$, $M_b$ and $M_c$ each being an integer of from 1 to 1000, preferably $M_a$, $M_b$ and $M_c$ each being an integer of

from 5 to 500.

7. Compound according to at least one of Claims 1 to 6, **characterized in that** the compound is represented by at least one of formulas (Va) to (Vd):

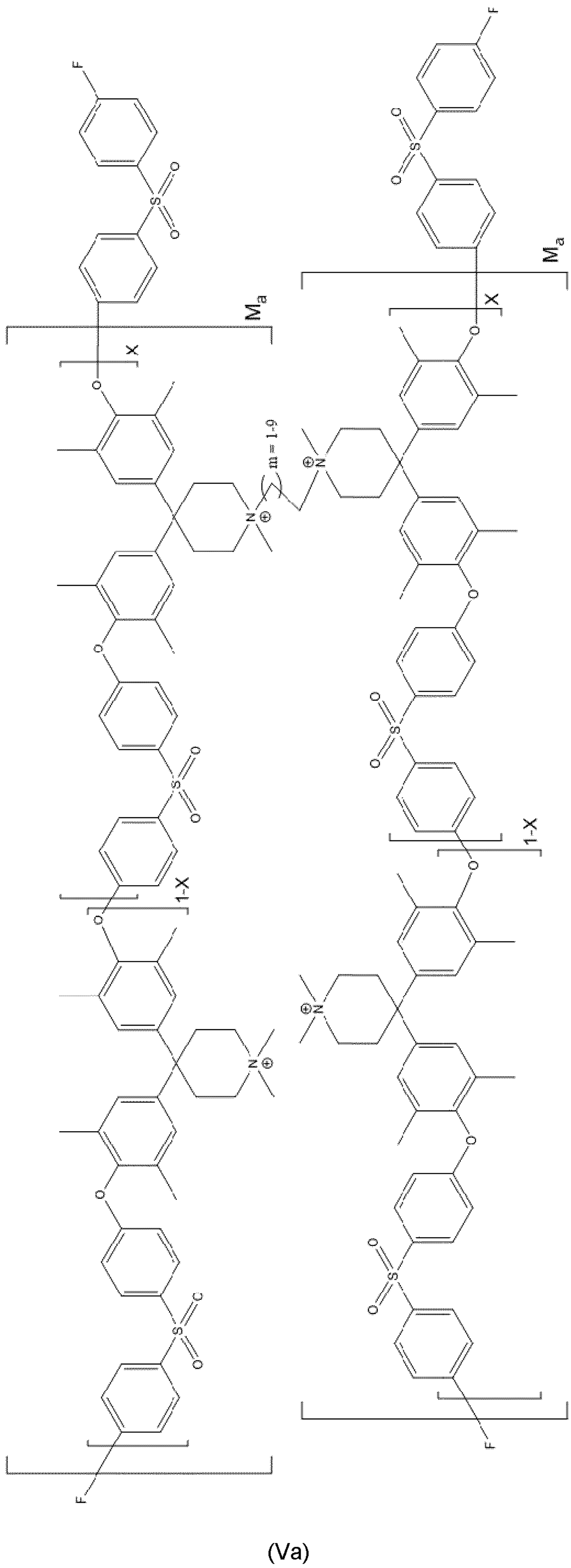

(Va)

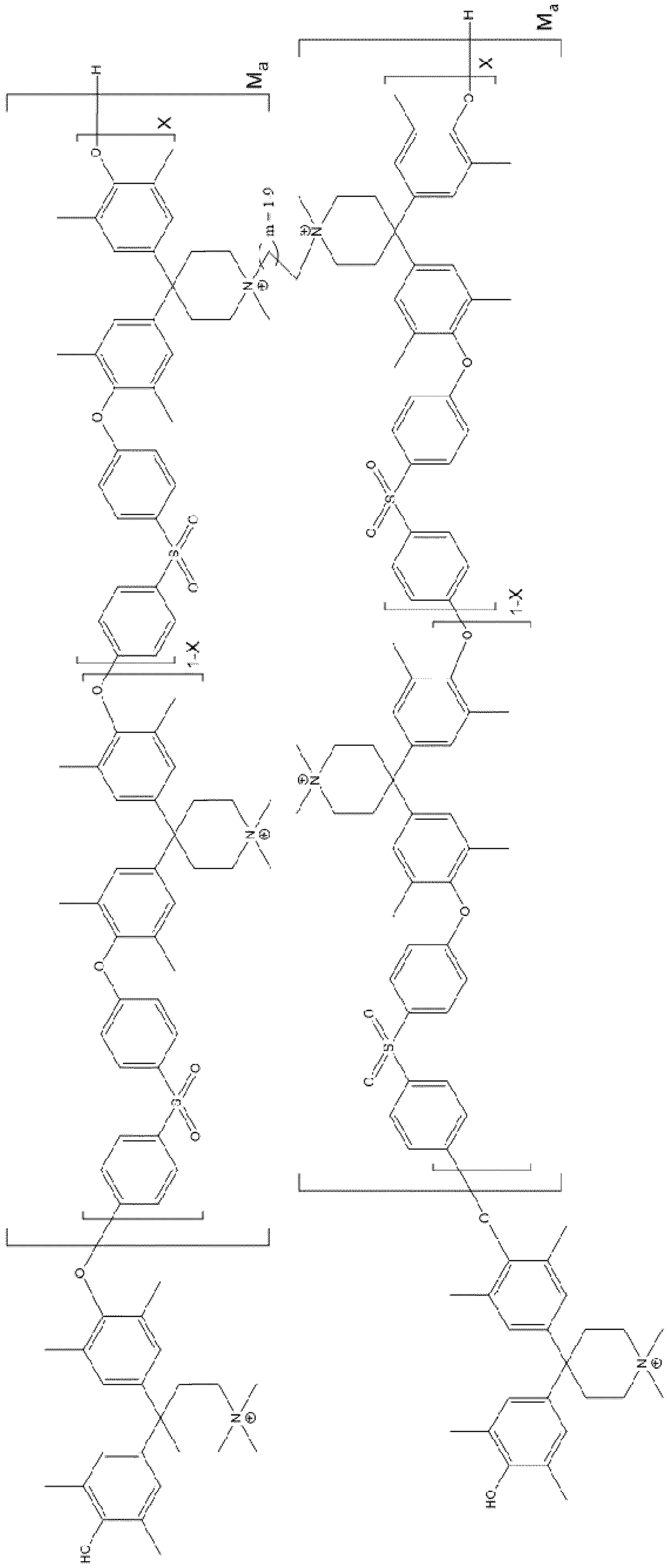

(Vb)

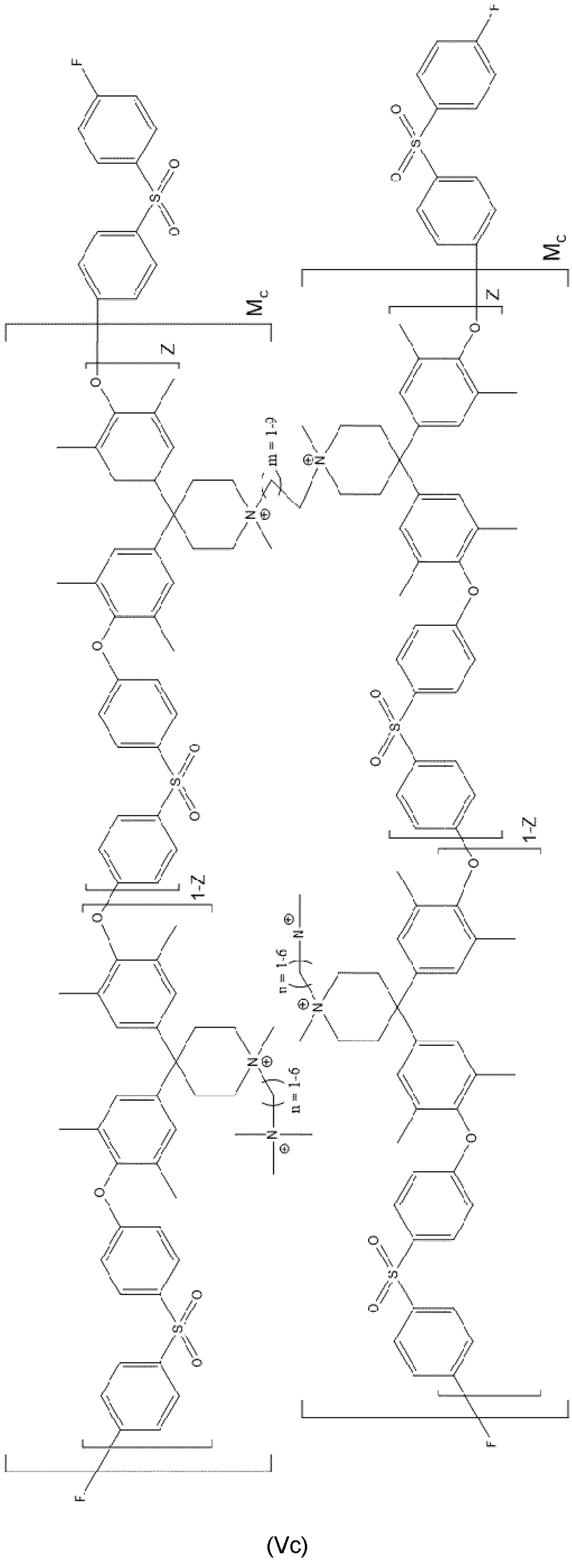

(Vc)

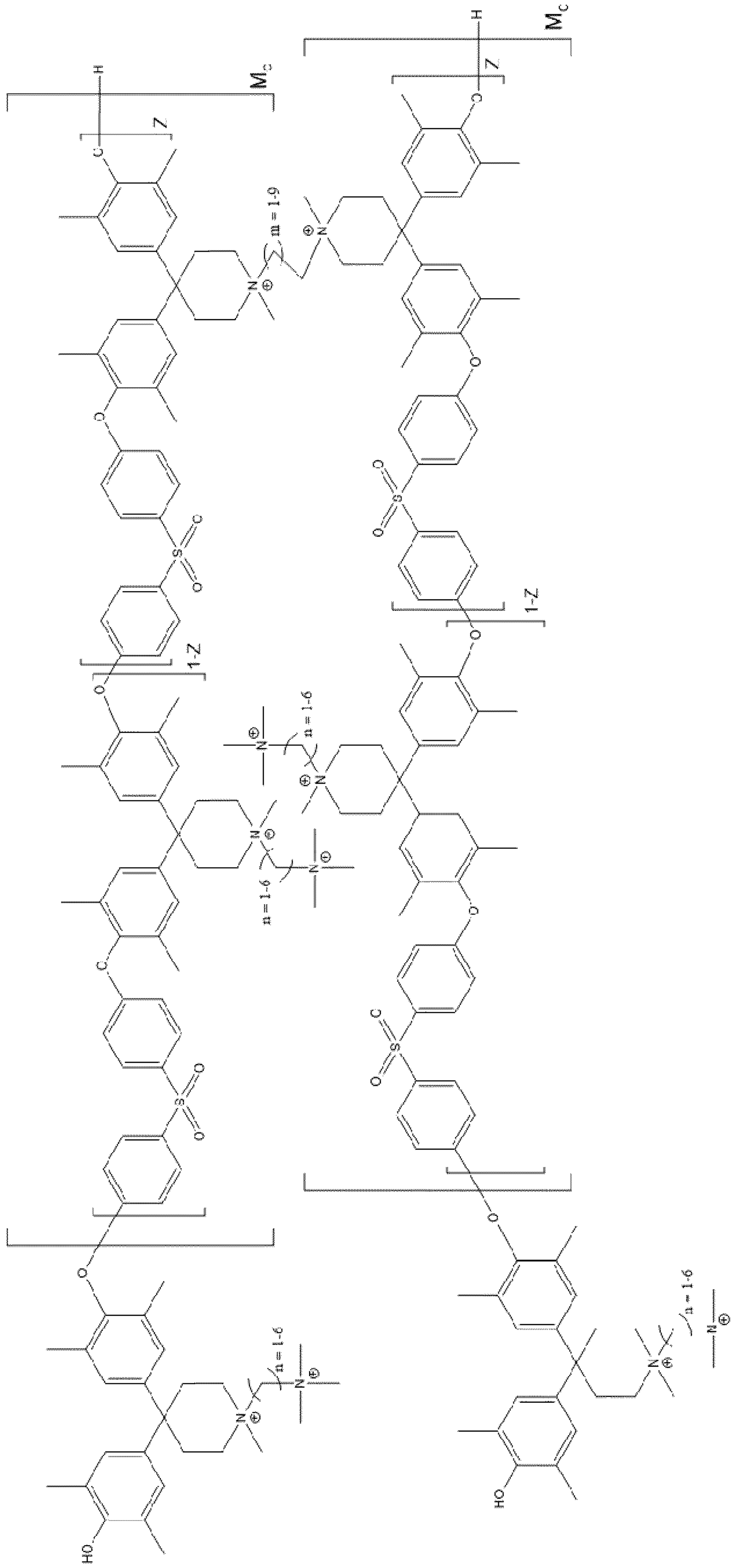

(Vd)

with at least two polymer chains being connected with an aliphatic chain having from 1 to 10 carbon atoms (m = 1-9), with $M_a$, $M_b$ and $M_c$ each being an integer from 1 to 1000, preferably with $M_a$, $M_b$ and $M_c$ each being an integer from 5 to 500, with X and Z each being between 0.01 and 0.5, preferably with X and Z each being between 0.01 and 0.25.

**8.** Compound according to any of claims 1 to 7, wherein said aromatic 6-ring directly bonded to one of the oxygen atoms, which is substituted in position 3 and 5 with the same or different alkyl group having from 1 to 4 carbon atoms, is further substituted with one or more halogen and/or one or more $C_1$- to $C_4$- alkyl radicals.

**9.** Compound according to any of claims 1 to 7, wherein said aromatic 6-ring directly bonded to one of the oxygen atoms, which is substituted in position 3 and 5 with the same or different alkyl group having from 1 to 4 carbon atoms, is free of any further substitution with one or more halogen and/or one or more $C_1$- to $C_4$- alkyl radicals.

**10.** Process for preparing compounds according to any one of Claims 1 to 9, **characterized in that** it comprises a step in which a compound of the formula (VI), where Y is same or different halogen, preferred F,

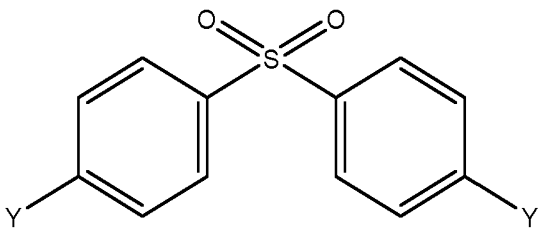

(VI)

is reacted with one or both compounds selected from formulas (VIIa) or/and (VIIb)

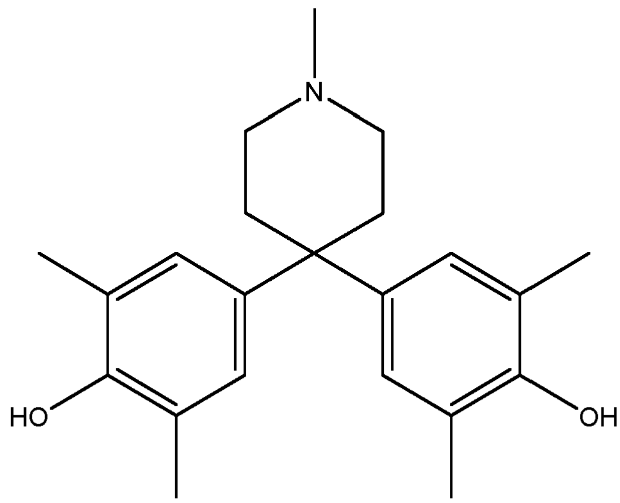

(VIIa)

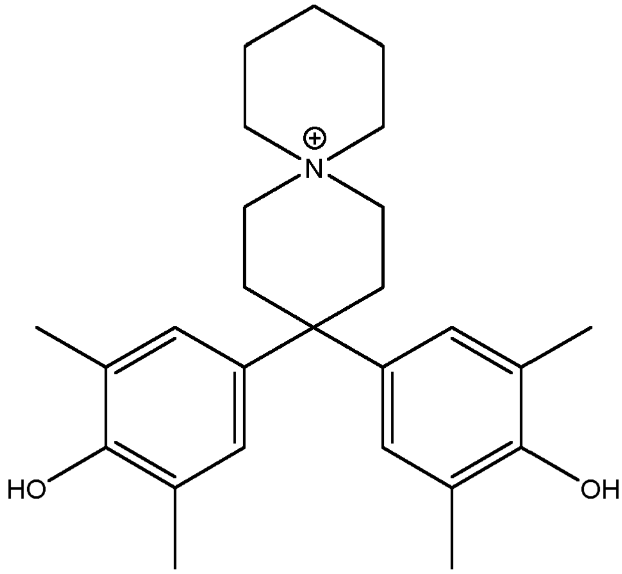

(VIIb)

wherein the aromatic rings might further be substituted with one or more halogen and/or one or more $C_1$- to $C_4$-alkyl radicals.

**11.** Process according to Claim 10, **characterized in that** it comprises a step where an alkylating reagent, preferably a methylating reagent, is used.

**12.** Process according to Claim 10 or 11, **characterized in that** the aromatic rings in the compounds of formula (VI), (VIIa) and (VIIb) are free of any further substitution with one or more halogen or one or more $C_1$- to $C_4$- alkyl radicals.

**13.** Use of a compound according to any of Claims 1 to 9 as anion-conducting membrane or for the production of an anion-conducting membrane.

**14.** Electrochemical cell having an anion-conducting membrane, **characterized in that** said anion-conducting membrane comprises at least one compound according to at least one of claims 1 to 9.

**15.** Electrochemical cell according to claim 14, **characterized in that** electrochemical cell is a component of an electrolyzer or of a fuel cell or of a redox flow battery.

**16.** Performing an electrochemical process by means of an electrochemical cell according to claim 14.

**17.** Performing an electrochemical process according to claim 16, wherein said electrochemical process is an electrolysis or an electrodialysis or an electrochemical process taking place during operation of a fuel cell or an electrochemical process taking place during operation of a redox flow battery.

**Patentansprüche**

**1.** Verbindung, enthaltend mindestens einen Baustein der Formel (I)

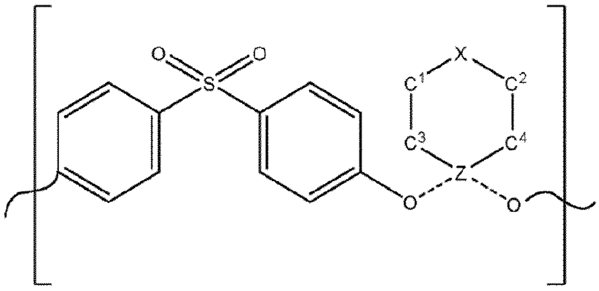

(I)

wobei X ein Strukturelement ist, das mindestens ein Stickstoffatom mit einer positiven Ladung umfasst, das an $C^1$ und $C^2$ gebunden ist und über zwei Bindungen an einen oder zwei Kohlenwasserstoffreste mit 1 bis 12, vorzugsweise 1 bis 6, weiter bevorzugt 1 oder 5 Kohlenstoffatomen gebunden ist, und Z ein Strukturelement ist, das ein Kohlenstoffatom umfasst, das an $C^3$ und $C^4$ und mindestens einen direkt an eines der Sauerstoffatome gebundenen aromatischen 6-Ring gebunden ist, wobei der aromatische 6-Ring in Position 3 und 5 durch gleiche oder verschiedene Alkylgruppen mit 1 bis 4 Kohlenstoffatomen substituiert ist, bei denen es sich vorzugsweise um eine Methyl-, Isopropyl- oder tert-Butylgruppe, weiter bevorzugt eine Methylgruppe, handelt.

2. Verbindung nach Anspruch 1, **dadurch gekennzeichnet, dass** die Verbindung durch Formel (Ia) oder (Ib) wiedergegeben wird:

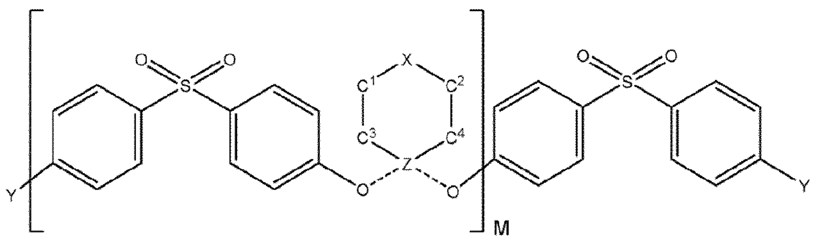

(Ia)

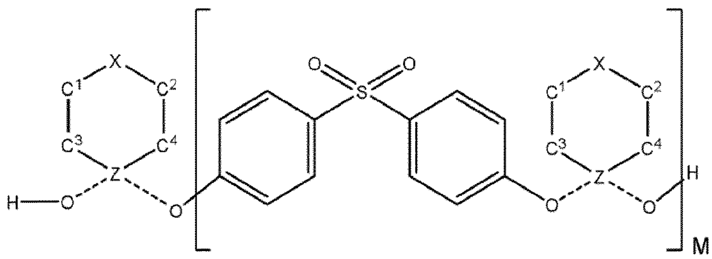

(Ib)

wobei Y = gleiches oder verschiedenes Halogen, vorzugsweise Y = F, und wobei M eine ganze Zahl von 1 bis 1000 ist, wobei M vorzugsweise eine ganze Zahl von 5 bis 500 ist ist.

3. Verbindung nach Anspruch 1 oder 2, **dadurch gekennzeichnet, dass** das Strukturelement X für einen Baustein der Formel (IIa), (IIb) oder (IIc) steht:

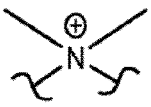

(IIa)

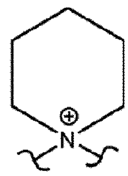

(IIb)

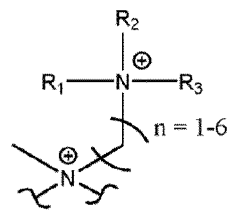

(IIc)

wobei $R^1$, $R^2$ und $R^3$ gleiche oder verschiedene Alkylgruppen mit 1 bis 6 Kohlenstoffatomen sind und zwei Stickstoffatome mit einer aliphatischen Kette mit 1 bis 6 Kohlenstoffatomen (n = 1-6) verbunden sind, wobei $R^1$, $R^2$ und $R^3$ jeweils vorzugsweise eine Methylgruppe sind.

4. Verbindung nach einem der Ansprüche 1 bis 3, **dadurch gekennzeichnet, dass** das in der Verbindung vorliegende Strukturelement X bei mehr als 5 %, vorzugsweise bei mehr als 50 % und ganz besonders bevorzugt bei mehr als 90 % seines Auftretens ein Baustein der Formel (IIa), (IIb) oder (IIc) ist.

5. Verbindung nach einem der Ansprüche 1 bis 4, **dadurch gekennzeichnet, dass** das Strukturelement Z für einen Baustein der Formel (III) steht:

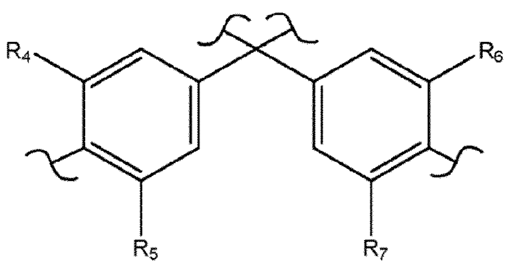

(III)

wobei $R_4$, $R_5$, $R_6$ und $R_7$ gleiche oder verschiedene Alkylgruppen mit 1 bis 4 Kohlenstoffatomen sind, wobei $R_4$, $R_5$, $R_6$ und $R_7$ jeweils vorzugsweise eine Methyl-, Isopropyl- oder tert-Butylgruppe, weiter bevorzugt eine Methylgruppe, sind.

6. Verbindung nach mindestens einem der Ansprüche 1 bis 5, **dadurch gekennzeichnet, dass** die Verbindung durch mindestens eine der Formeln (IVa) bis (IVf) wiedergegeben wird:

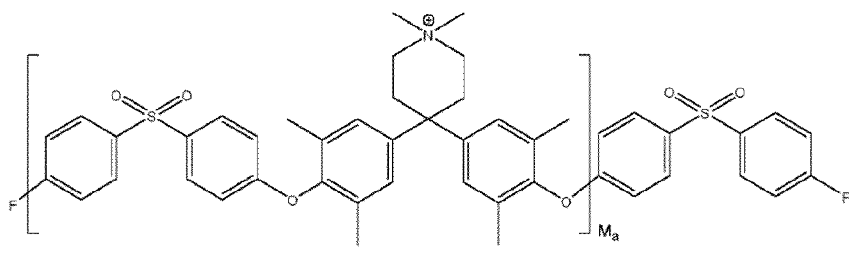

(IVa)

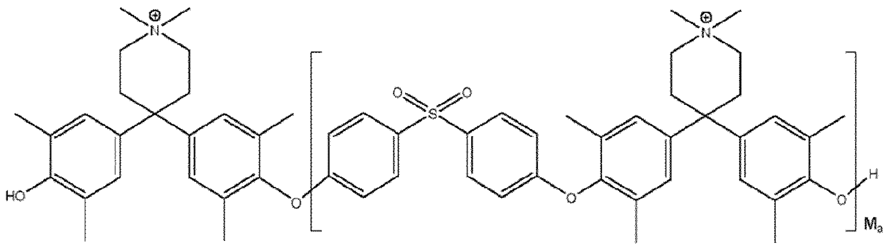

(IVb)

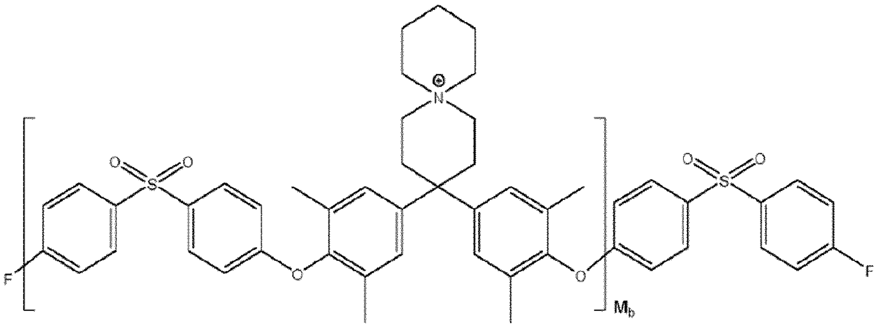

(IVc)

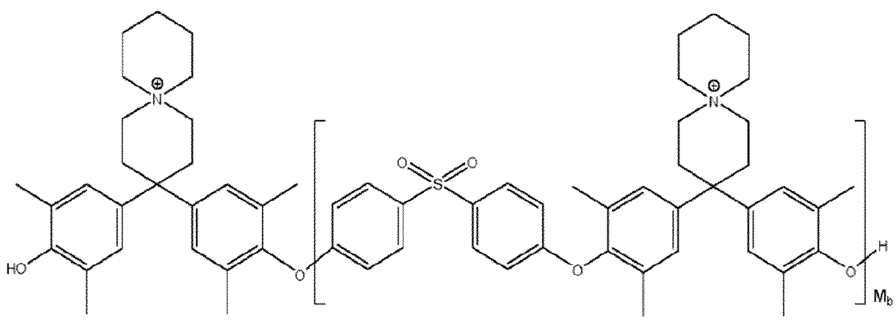

(IVd)

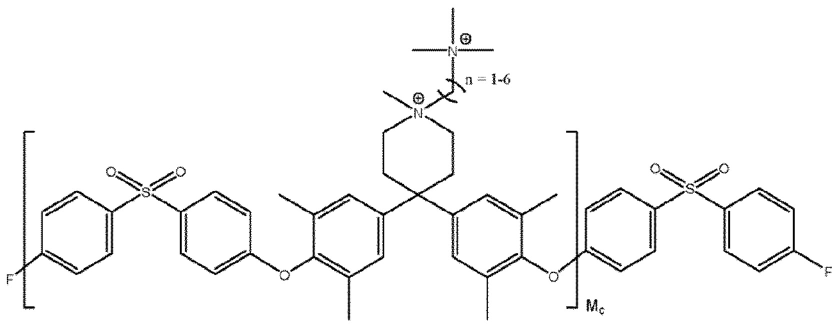

(IVe)

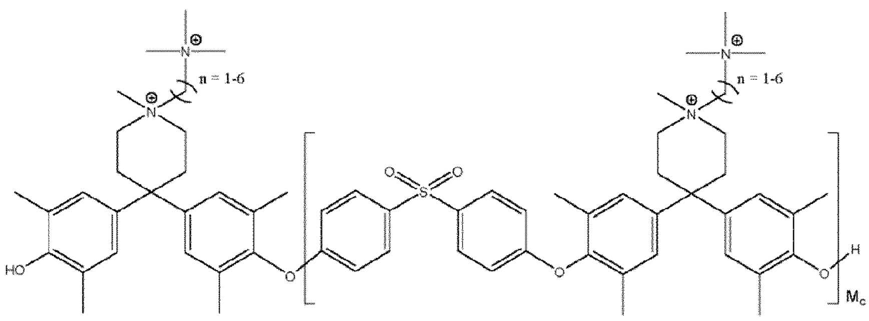

(IVf)

wobei $M_a$, $M_b$ und $M_c$ jeweils eine ganze Zahl von 1 bis 1000 sind, wobei $M_a$, $M_b$ und $M_c$ vorzugsweise jeweils eine ganze Zahl von 5 bis 500 sind.

**7.** Verbindung nach mindestens einem der Ansprüche 1 bis 6, **dadurch gekennzeichnet, dass** die Verbindung durch mindestens eine der Formeln (Va) bis (Vd) wiedergegeben wird:

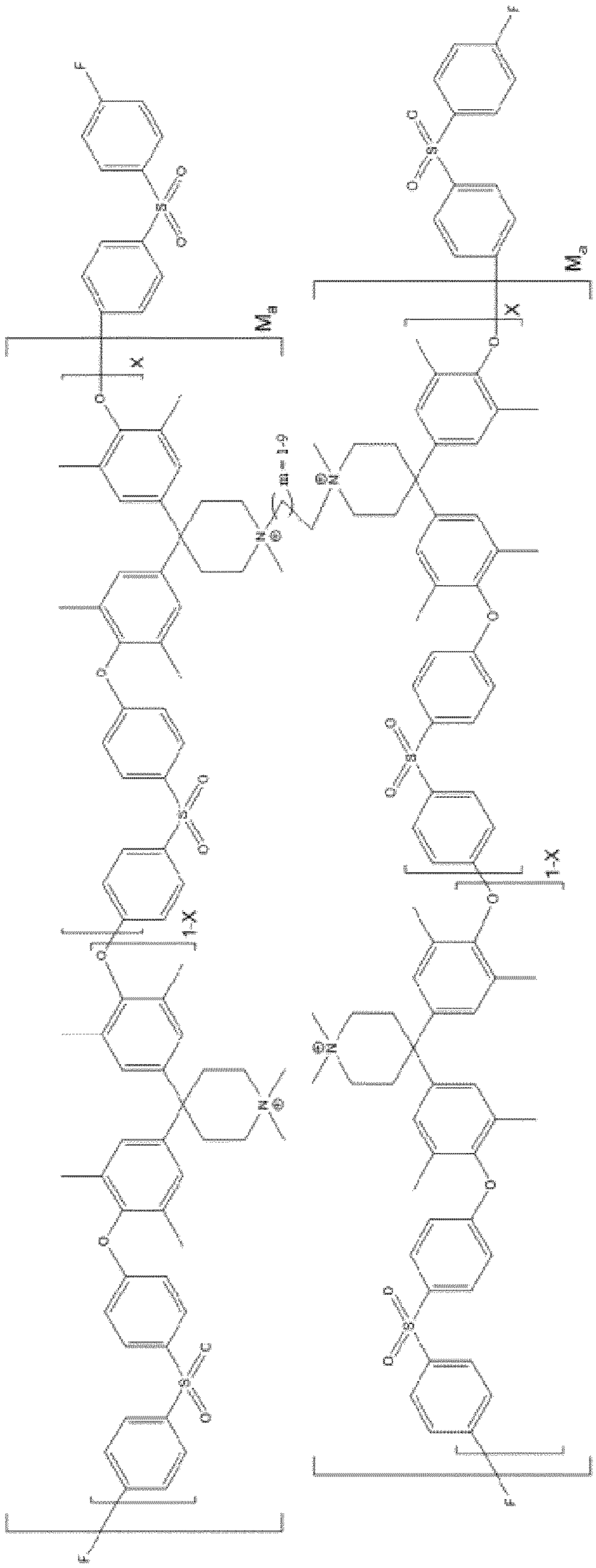

(Va)

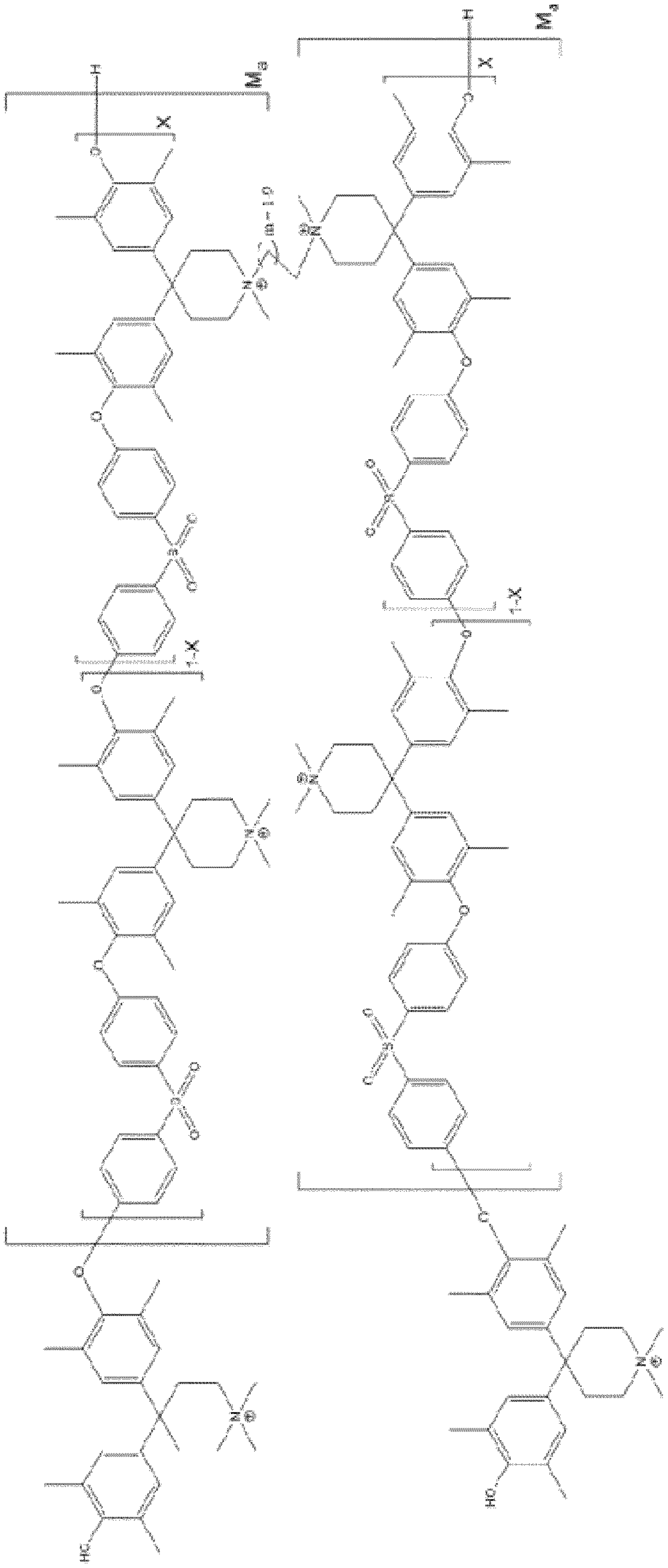

(Vb)

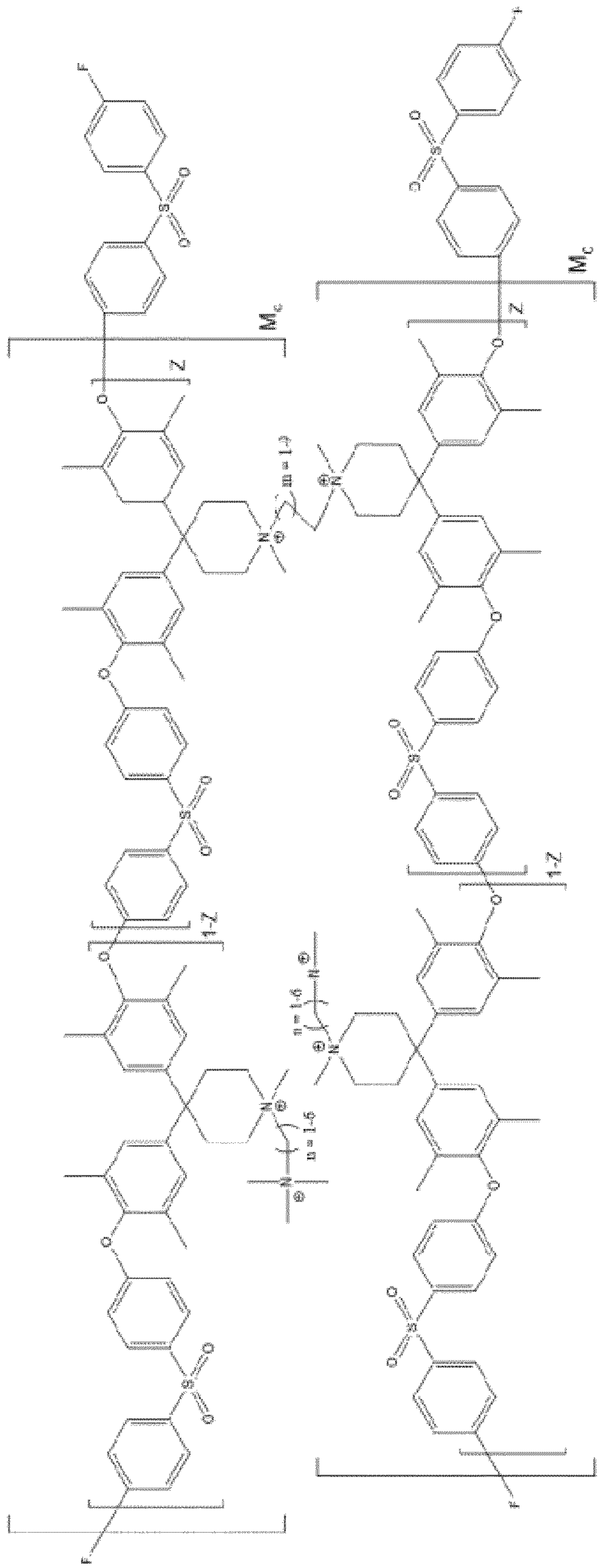

(Vc)

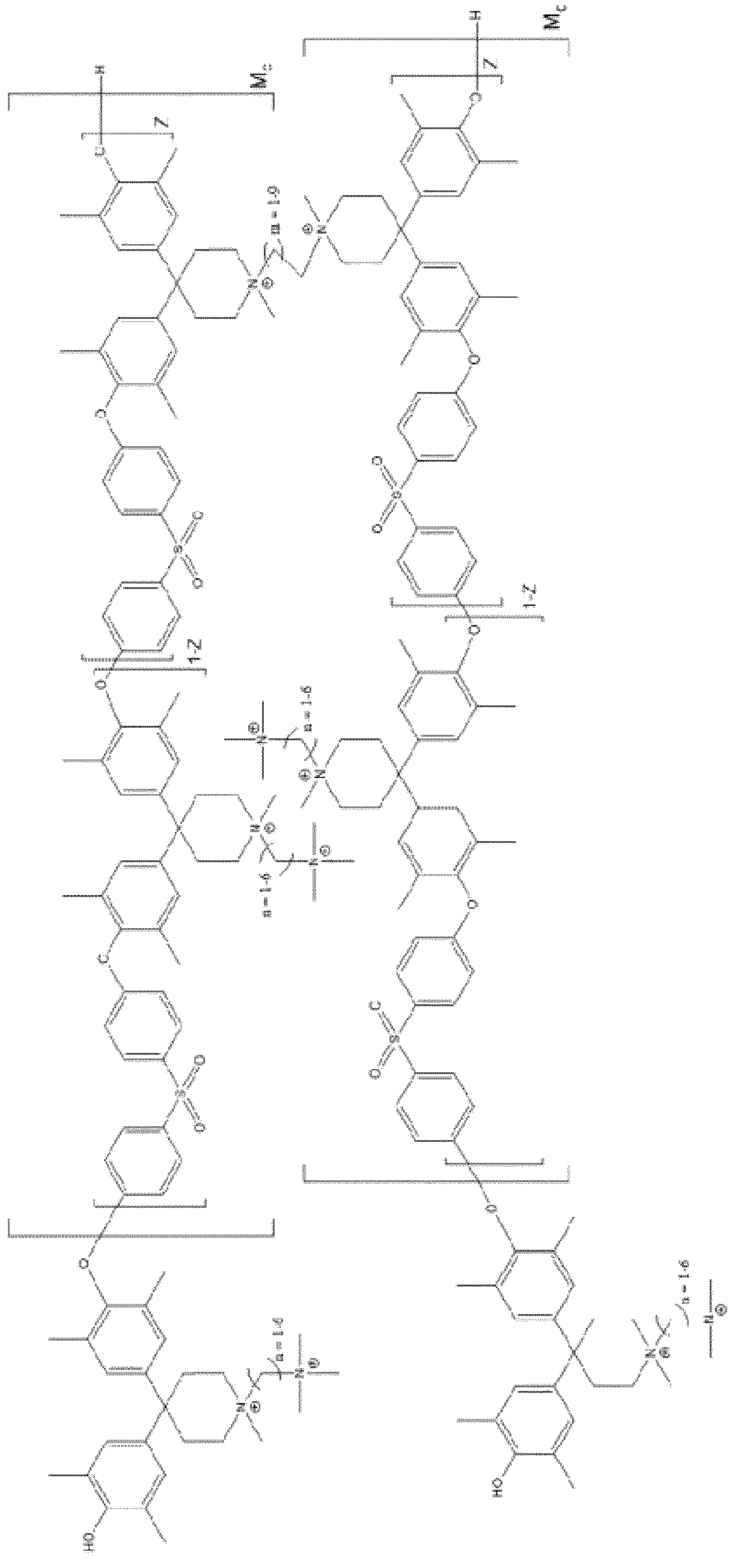

(Vd)

wobei mindestens zwei Polymerketten mit einer aliphatischen Kette mit 1 bis 10 Kohlenstoffatomen (m = 1-9) verbunden sind, wobei $M_a$, $M_b$ und $M_c$ jeweils eine ganze Zahl von 1 bis 1000 sind, wobei $M_a$, $M_b$ und $M_c$ vorzugsweise

jeweils eine ganze Zahl von 5 bis 500 sind, wobei X und Z jeweils zwischen 0,01 und 0,5 liegen, wobei X und Z vorzugsweise jeweils zwischen 0,01 und 0,25 liegen.

**8.** Verbindung nach einem der Ansprüche 1 bis 7, wobei der direkt an eines der Sauerstoffatome gebundene aromatische 6-Ring, der in Position 3 und 5 durch gleiche oder verschiedene Alkylgruppen mit 1 bis 4 Kohlenstoffatomen substituiert ist, weiter durch ein oder mehrere Halogene und/oder einen oder mehrere $C_1$- bis $C_4$-Alkylreste substituiert ist.

**9.** Verbindung nach einem der Ansprüche 1 bis 7, wobei der direkt an eines der Sauerstoffatome gebundene aromatische 6-Ring, der in Position 3 und 5 durch gleiche oder verschiedene Alkylgruppen mit 1 bis 4 Kohlenstoffatomen substituiert ist, frei von jeglicher weiterer Substitution durch ein oder mehrere Halogene und/oder einen oder mehrere $C_1$- bis $C_4$-Alkylreste ist.

**10.** Verfahren zur Herstellung von Verbindung nach einem der Ansprüche 1 bis 9, **dadurch gekennzeichnet, dass** es einen Schritt umfasst, in dem eine Verbindung der Formel (VI), wobei Y für gleiche oder verschiedene Halogene, bevorzugt F, steht,

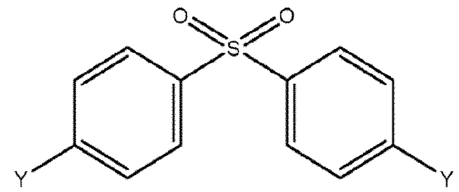

(VI)

mit einer oder beiden Verbindungen, die aus den Formeln (VIIa) oder/und (VIIb)

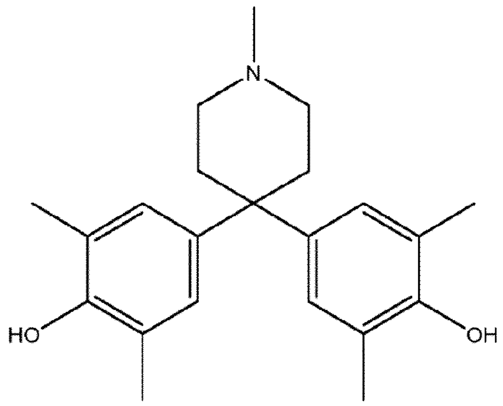

(VIIa)

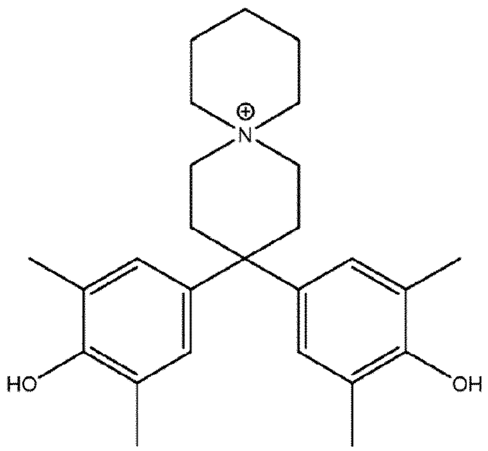

(VIIb)

ausgewählt werden, wobei die aromatischen Ringe weiter durch ein oder mehrere Halogene und/oder einen oder mehrere $C_1$- bis $C_4$-Alkylreste substituiert sein können, umgesetzt wird.

**11.** Verfahren nach Anspruch 10, **dadurch gekennzeichnet, dass** es einen Schritt umfasst, bei dem ein Alkylierungsreagenz, vorzugsweise ein Methylierungsreagenz, verwendet wird.

**12.** Verfahren nach Anspruch 10 oder 11, **dadurch gekennzeichnet, dass** die aromatischen Ringe in den Verbindungen der Formel (VI), (VIIa) und (VIIb) frei von jeglicher weiterer Substitution durch ein oder mehrere Halogene und/oder einen oder mehrere $C_1$- bis $C_4$-Alkylreste sind.

**13.** Verwendung einer Verbindung nach einem der Ansprüche 1 bis 9 als Anionen leitende Membran oder zur Herstellung einer Anionen leitenden Membran.

**14.** Elektrochemische Zelle mit einer Anionen leitenden Membran, **dadurch gekennzeichnet, dass** die Anionen leitende Membran mindestens eine Verbindung nach mindestens einem der Ansprüche 1 bis 9 umfasst.

**15.** Elektrochemische Zelle nach Anspruch 14, **dadurch gekennzeichnet, dass** es sich bei der elektrochemischen Zelle um ein Bauteil eines Elektrolyseurs oder einer Brennstoffzelle oder einer Redox-Flow-Batterie handelt.

**16.** Durchführen eines elektrochemischen Prozesses mit Hilfe einer elektrochemischen Zelle nach Anspruch 14.

**17.** Durchführen eines elektrochemischen Prozesses nach Anspruch 16, wobei es sich bei dem elektrochemischen Prozess um eine Elektrolyse oder eine Elektrodialyse oder einen elektrochemischen Prozess, der während des Betriebs einer Brennstoffzelle stattfindet, oder einen elektrochemischen Prozess, der während des Betriebs einer Redox-Flow-Batterie stattfindet, handelt.

**Revendications**

**1.** Composé contenant au moins une unité de la formule (I)

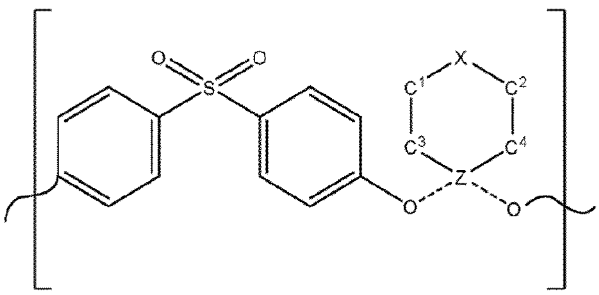

(I)

X étant un élément de structure comprenant au moins un atome d'azote doté d'une charge positive lié à $C^1$ et $C^2$ et lié via deux liaisons à un ou deux radicaux hydrocarbonés comprenant 1 à 12, de préférence 1 à 6, plus préférablement 1 ou 5 atomes de carbone et Z étant un élément de structure comprenant un atome de carbone lié à $C^3$ et $C^4$ et au moins un cycle aromatique à 6 chaînons directement lié à l'un des atomes d'oxygène, dans lequel ledit cycle aromatique à 6 chaînons est substitué en position 3 et 5 par le même groupe alkyle ou un groupe alkyle différent ayant de 1 à 4 atomes de carbone, de préférence étant un groupe méthyle, iso-propyle ou tert-butyle, plus préférablement étant un groupe méthyle.

**2.** Composé selon la revendication 1, **caractérisé en ce que** le composé est représenté par la formule (Ia) ou (Ib)

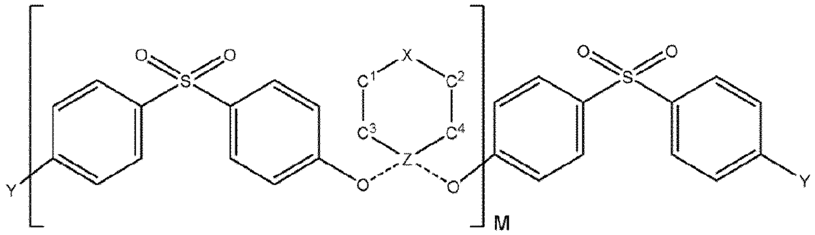

(Ia)

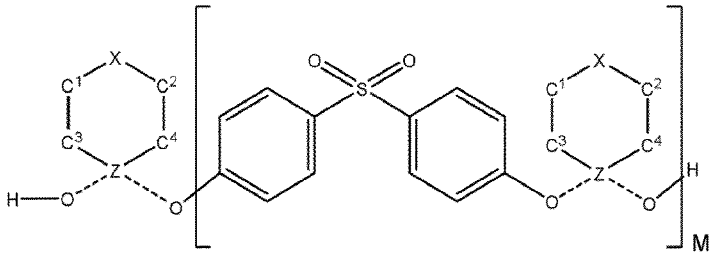

(Ib)

Y = halogène identique ou différent, de préférence Y = F et M étant un entier de 1 à 1 000, de préférence M étant un entier de 5 à 500.

**3.** Composé selon la revendication 1 ou 2, **caractérisé en ce que** l'élément de structure X représente une unité de formule (IIa), (IIb) ou (IIc)

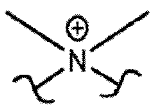

(IIa)

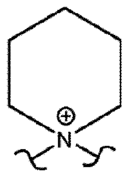

(IIb)

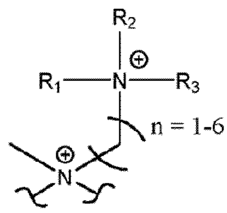

(IIc)

$R^1$, $R^2$ et $R^3$ étant le même groupe alkyle ou un groupe alkyle différent ayant de 1 à 6 atomes de carbone et deux atomes d'azote reliés par une chaîne aliphatique ayant de 1 à 6 atomes de carbone (n = 1-6), $R^1$, $R^2$ et $R^3$ étant préférablement chacun un groupe méthyle.

**4.** Composé selon l'une quelconque des revendications 1 à 3, **caractérisé en ce que** l'élément de structure X présent dans le composé représente dans plus de 5 %, de préférence dans plus de 50 %, et de la manière la plus préférée dans plus de 90 % de son occurrence, une unité de formule (IIa), (IIb) ou (IIc).

**5.** Composé selon l'une quelconque des revendications 1 à 4, **caractérisé en ce que** l'élément de structure Z représente

une unité de formule (III)

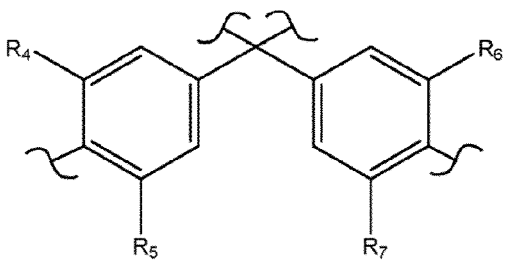

(III)

$R_4$, $R_5$, $R_6$ et $R_7$ étant le même groupe alkyle ou un groupe alkyle différent ayant de 1 à 4 atomes de carbone, $R_4$, $R_5$, $R_6$ et $R_7$ étant chacun préférablement un groupe méthyle, iso-propyle ou tert-butyle, plus préférablement un groupe méthyle.

**6.** Composé selon au moins l'une des revendications 1 à 5, **caractérisé en ce que** le composé est représenté par au moins une des formules (IVa) à (IVf) :

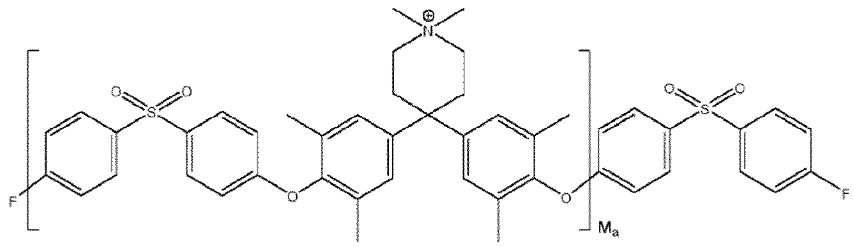

(IVa)

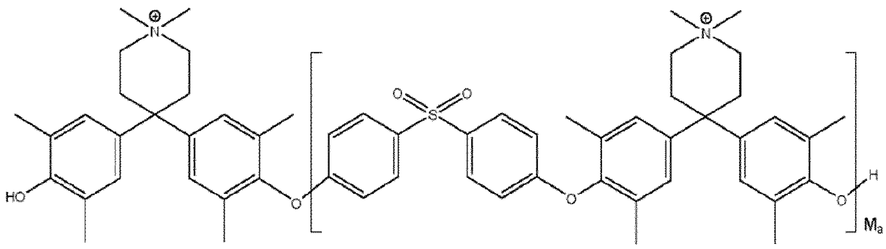

(IVb)

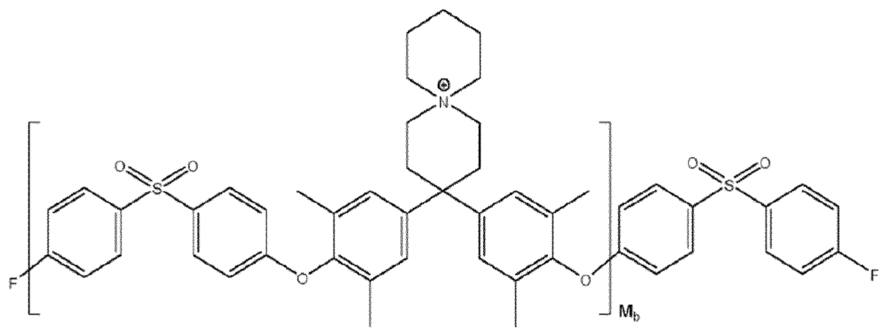

(IVc)

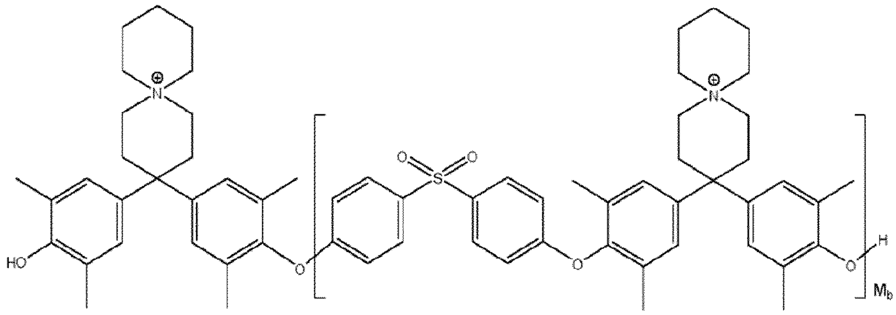
(IVd)

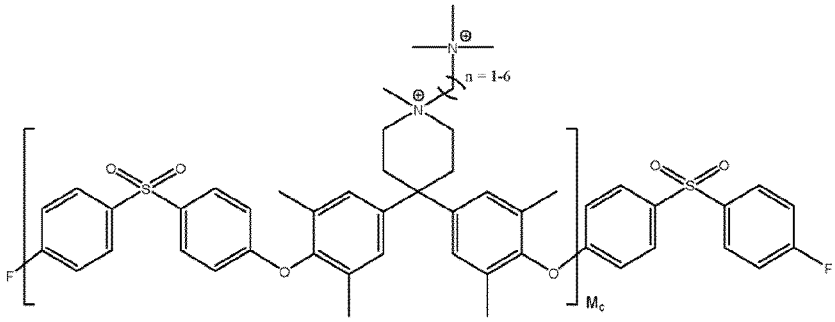
(IVe)

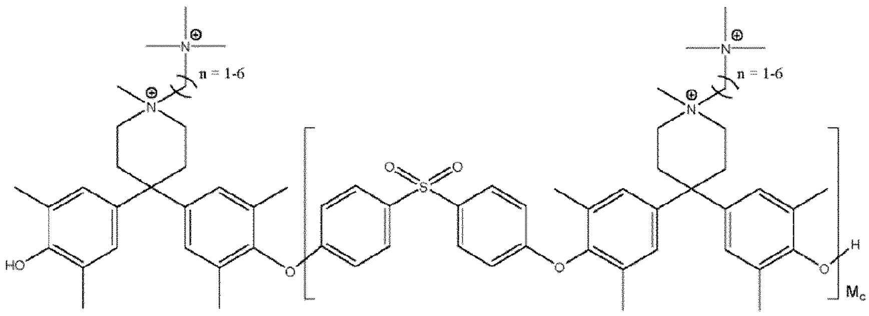
(IVf)

$M_a$, $M_b$ et $M_c$ étant chacun un entier allant de 1 à 1 000, de préférence $M_a$, $M_b$ et $M_c$ étant chacun un entier allant de 5 à 500.

**7.** Composé selon au moins l'une des revendications 1 à 6, **caractérisé en ce que** le composé est représenté par au moins une des formules (Va) à (Vd) :

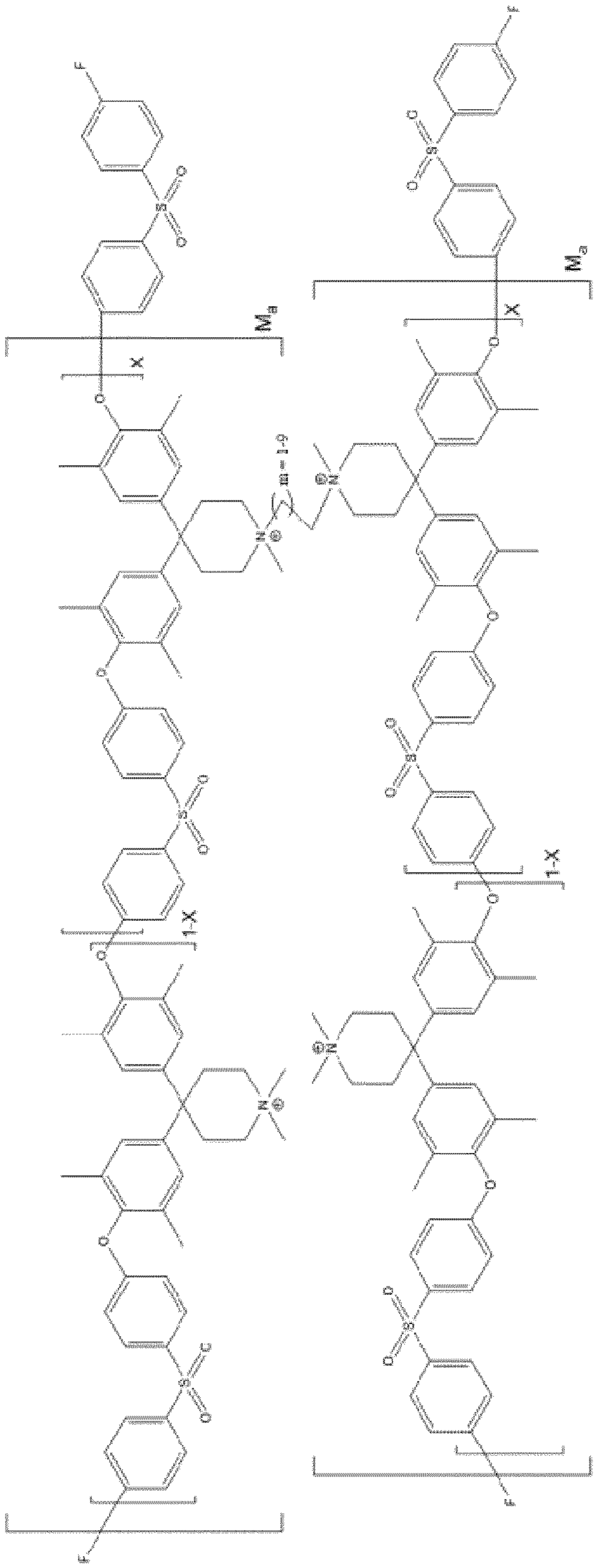

(Va)

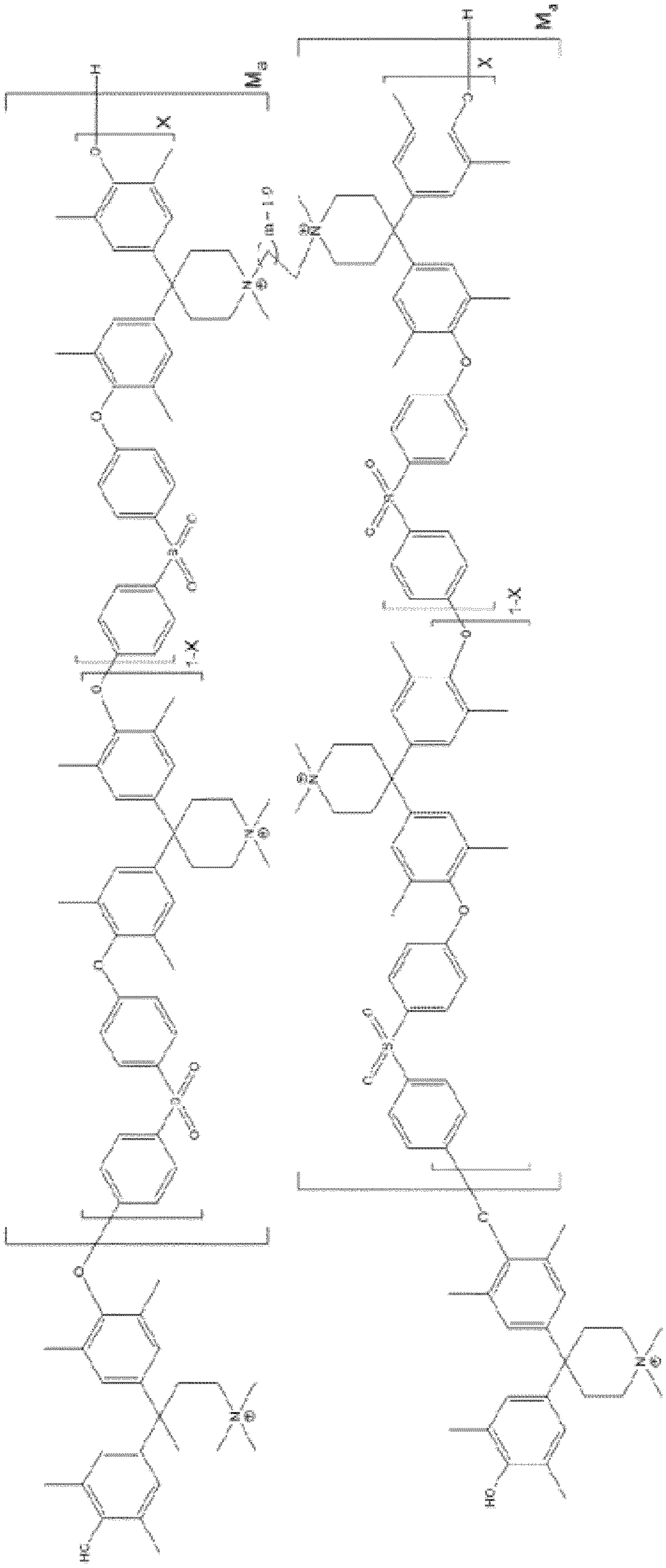

(Vb)

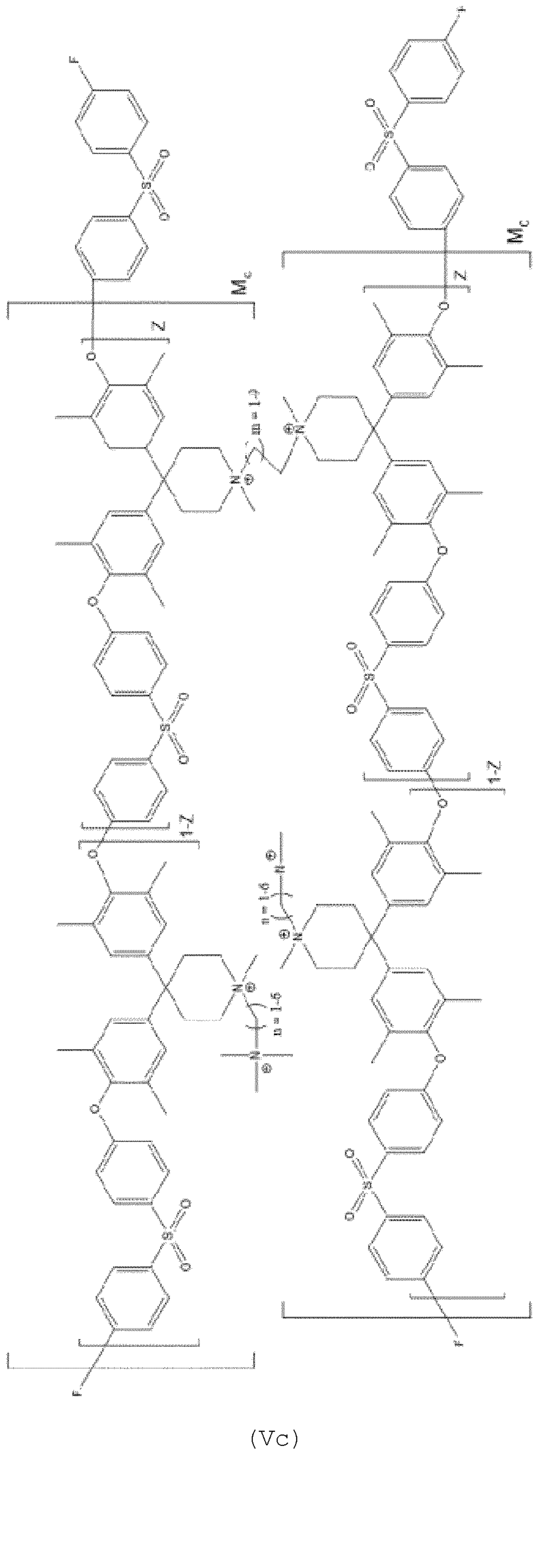

(Vc)

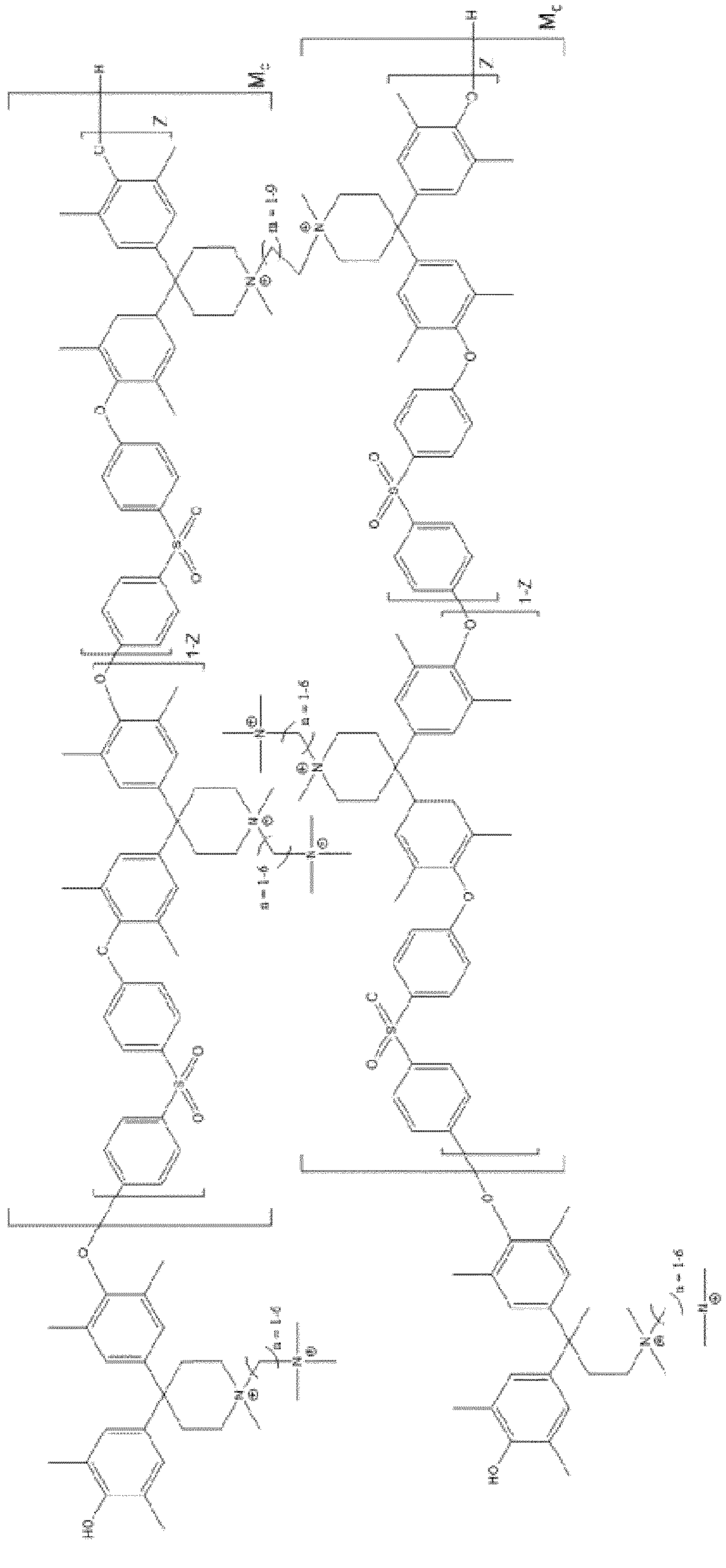

(Vd)

avec au moins deux chaînes de polymères qui sont reliées par une chaîne aliphatique ayant de 1 à 10 atomes de carbone (m = 1-9), $M_a$, $M_b$ et $M_c$ étant chacun un entier de 1 à 1 000, de préférence, $M_a$, $M_b$ et $M_c$ étant chacun un

entier de 5 à 500, X et Z étant chacun compris entre 0,01 et 0,5, de préférence X et Z étant compris chacun entre 0,01 et 0,25.

**8.** Composé selon l'une quelconque des revendications 1 à 7, dans lequel ledit cycle aromatique à 6 chaînons directement lié à l'un des atomes d'oxygène, qui est substitué en position 3 et 5 par le même groupe alkyle ou un groupe alkyle différent ayant de 1 à 4 atomes de carbone, est en outre substitué par un ou plusieurs halogènes et/ou un ou plusieurs radicaux $C_1$- à $C_4$- alkyle.

**9.** Composé selon l'une quelconque des revendications 1 à 7, dans lequel ledit cycle aromatique à 6 chaînons directement lié à l'un des atomes d'oxygène, qui est substitué en position 3 et 5 par le même groupe alkyle ou un groupe alkyle différent ayant de 1 à 4 atomes de carbone, est exempt de toute autre substitution par un ou plusieurs halogènes et/ou un ou plusieurs radicaux $C_1$-à $C_4$- alkyle.

**10.** Procédé pour la préparation de composés selon l'une quelconque des revendications 1 à 9, **caractérisé en ce qu'**il comprend une étape dans laquelle un composé de la formule (VI), où Y est un halogène identique ou différent, de manière préférée F,

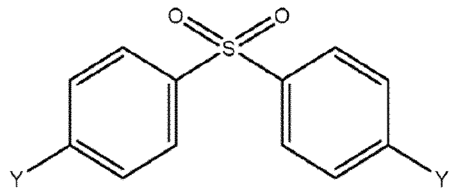

(VI)

est mis à réagir avec un composé ou les deux composés sélectionnés parmi les formules (VIIa) et/ou (VIIb)

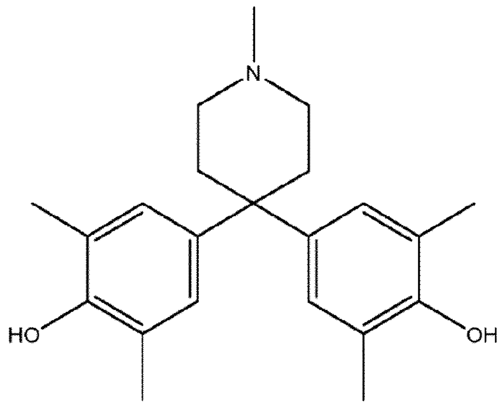

(VIIa)

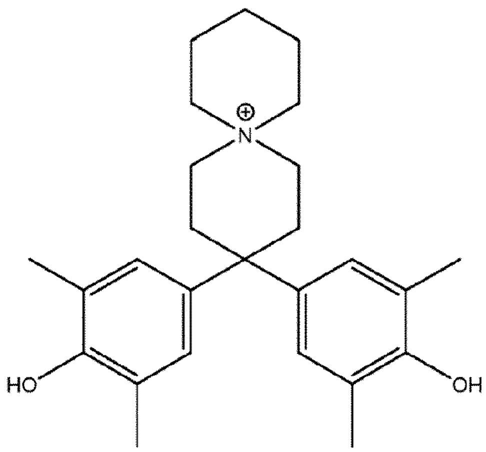

(VIIb)

dans lequel les cycles aromatiques peuvent en outre être substitués par un ou plusieurs halogènes et/ou un ou plusieurs radicaux $C_1$- à $C_4$- alkyle.

11. Procédé selon la revendication 10, **caractérisé en ce qu'**il comprend une étape où un réactif d'alkylation, de préférence un réactif de méthylation, est utilisé.

12. Procédé selon la revendication 10 ou 11, **caractérisé en ce que** les cycles aromatiques dans les composés de formule (VI), (VIIa) et (VIIb) sont exempts d'une quelconque substitution supplémentaire par un ou plusieurs halogènes ou un ou plusieurs radicaux $C_1$- à $C_4$-alkyle.

13. Utilisation d'un composé selon l'une quelconque des revendications 1 à 9 comme membrane conductrice d'anions ou pour la production d'une membrane conductrice d'anions.

14. Cellule électrochimique ayant une membrane conductrice d'anions, **caractérisée en ce que** ladite membrane conductrice d'anions comprend au moins un composé selon au moins l'une des revendications 1 à 9.

15. Cellule électrochimique selon la revendication 14, **caractérisée en ce que** la cellule électrochimique est un composant d'un électrolyseur, d'une pile à combustible ou d'une batterie redox.

16. Réalisation d'un procédé électrochimique au moyen d'une cellule électrochimique selon la revendication 14.

17. Réalisation d'un procédé électrochimique selon la revendication 16, dans laquelle ledit procédé électrochimique est une électrolyse ou une électrodialyse ou un procédé électrochimique ayant lieu pendant le fonctionnement d'une pile à combustible ou un procédé électrochimique ayant lieu pendant le fonctionnement d'une batterie rédox.

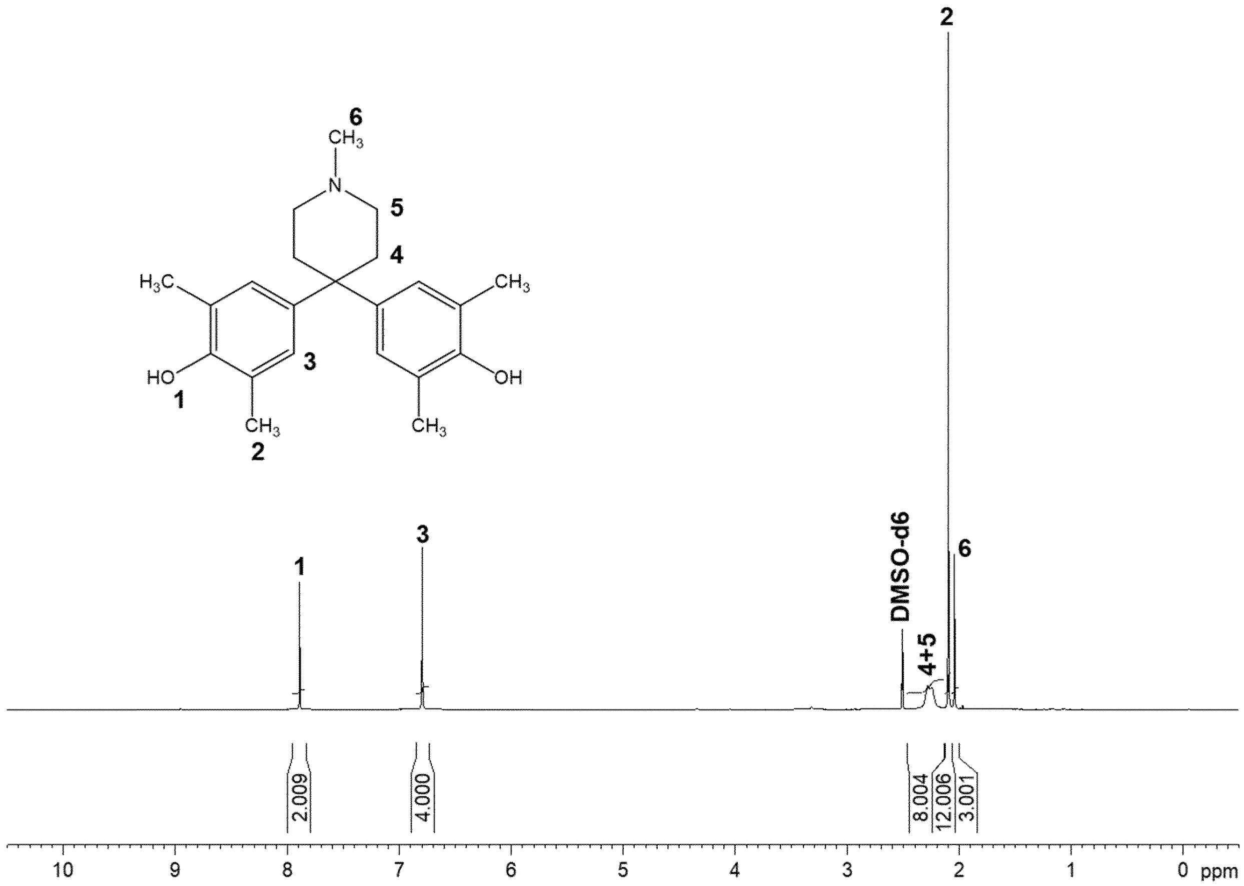


Fig. 1

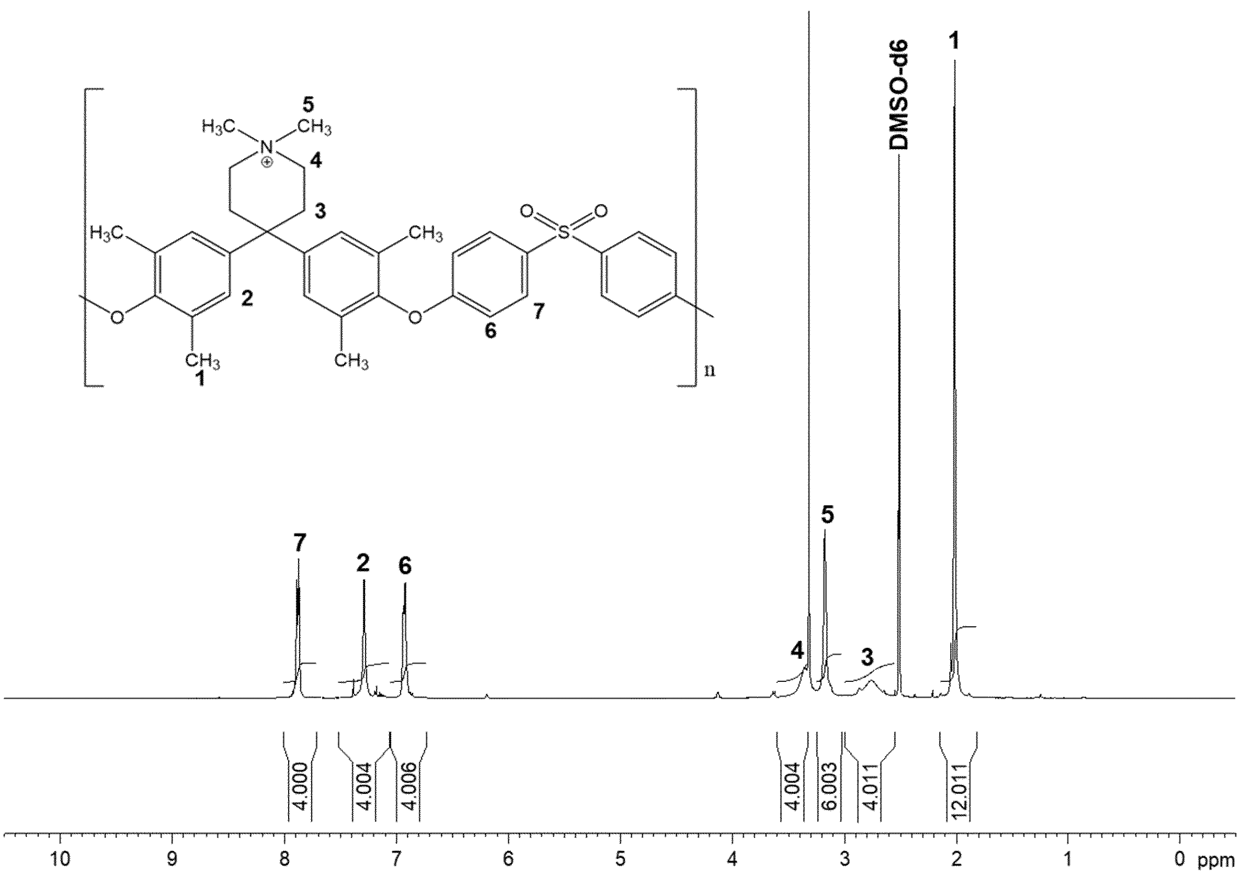
DMSO-d6
4.000
4.004
4.006
4.004
6.003
4.011
12.011
10
9
8
7
6
5
4
3
2
1
0 ppm

Fig. 2

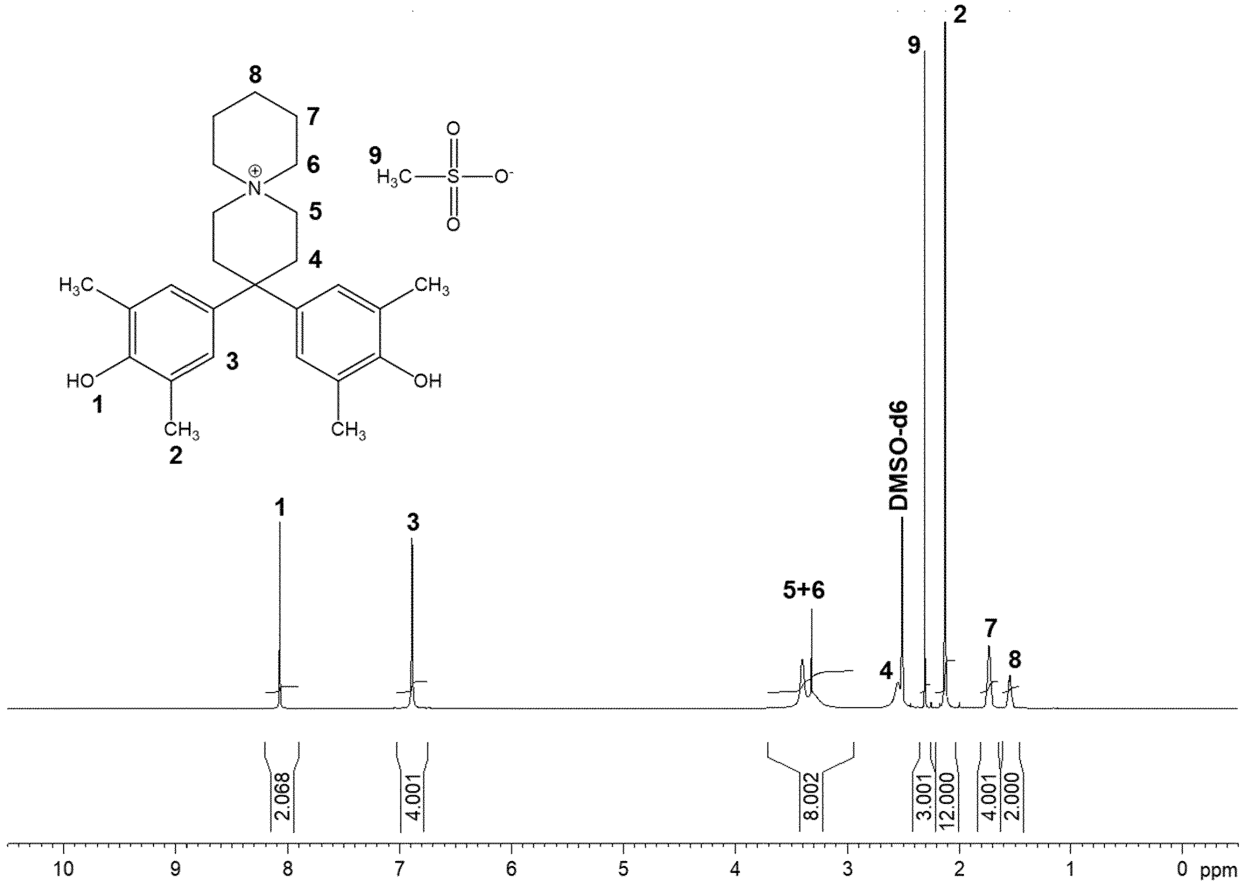
DMSO-d6
5+6
2.068
4.001
8.002
3.001
12.000
4.001
2.000
10 9 8 7 6 5 4 3 2 1 0 ppm

Fig. 3

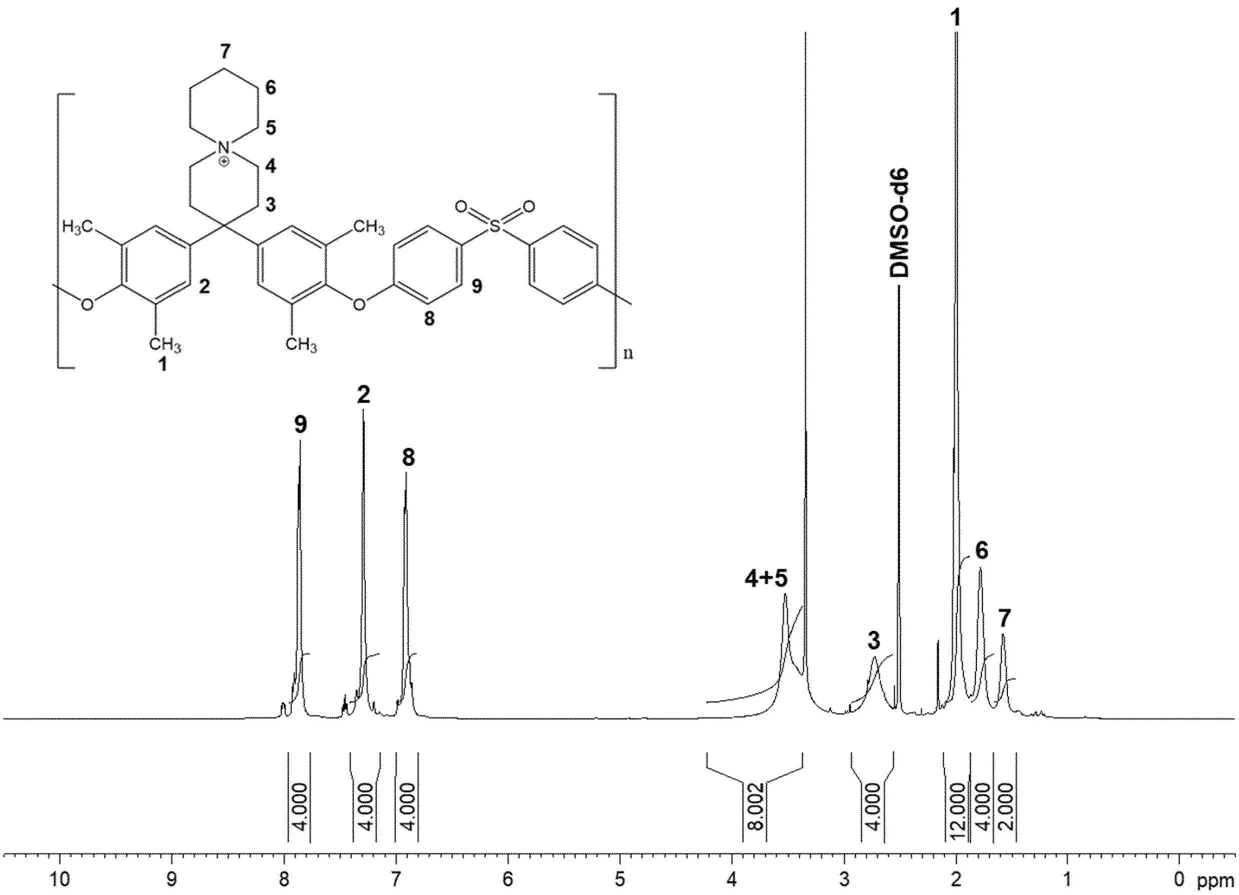
1
9
2
8
4+5
3
DMSO-d6
6
7
4.000
4.000
4.000
8.002
4.000
12.000
4.000
2.000
10
9
8
7
6
5
4
3
2
1
0 ppm

Fig. 4

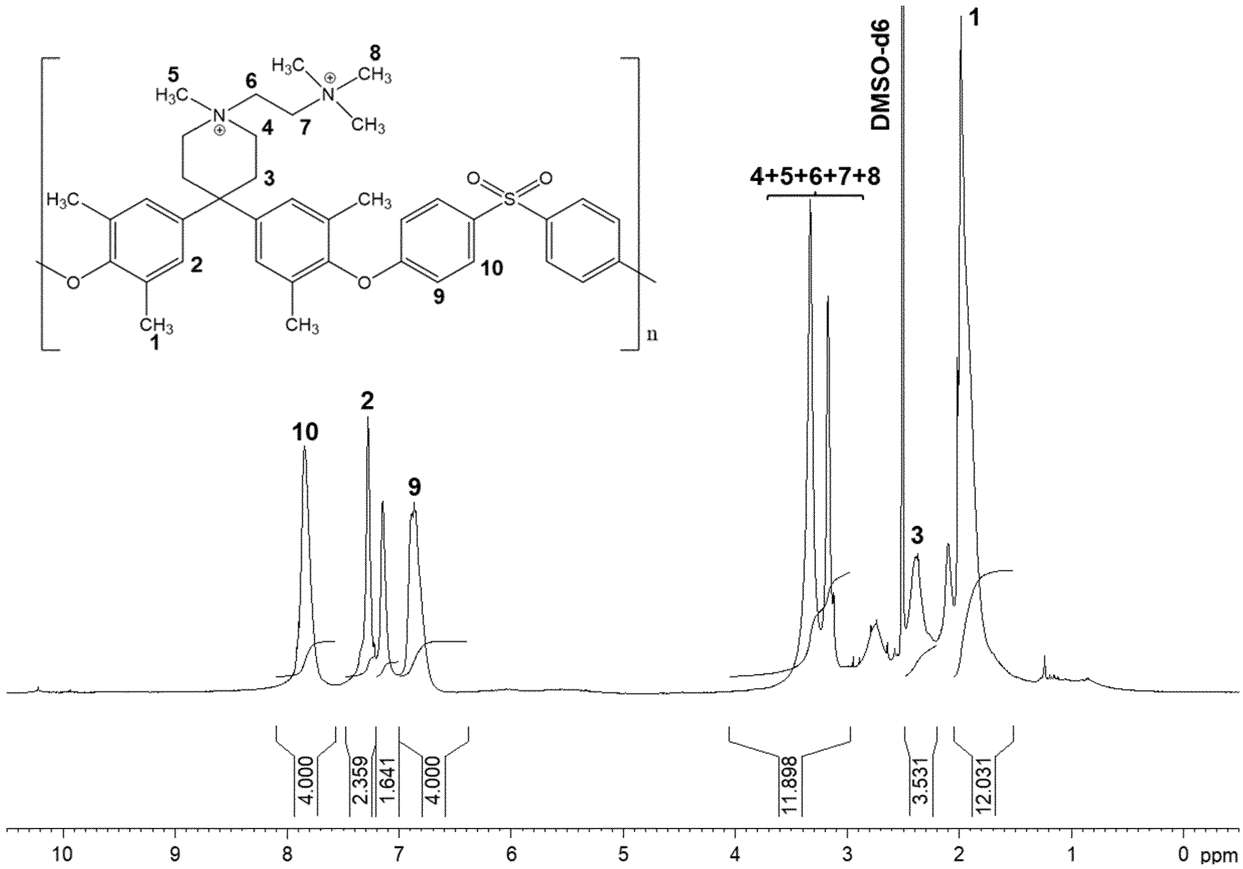
DMSO-d6
4+5+6+7+8
4.000
2.359
1.641
4.000
11.898
3.531
12.031
10
9
8
7
6
5
4
3
2
1
0 ppm

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019076860 A1
- CN 104829814 A
- CN 110294845 A
- CN 104829813 A
- CN 106750303 A
- CN 111040137 A
- CN 111269401 A
- CN 111303360 A
- EP 2424018 A1
- KR 20200046471 A
- WO 2017172824 A1
- WO 2019068051 A2
- EP 2020070153 W


### Non-patent literature cited in the description


- **WANG FEN et al.** Synthesis and property of novel anion exchange membrane based on poly (aryl ether sulfone)s bearing piperidinium moieties. *Journal of Membrane Science,* vol. 591, 117334-117342
- **LI SU et al.** Anion conductive piperidinium based poly (ehter sulfone): Synthesis, properties and cell performance. *Journal of Membrane Science,* vol. 594, 117471-117480